# EUROPEAN PATENT APPLICATION

(11) **EP 4 697 824 A1**
(43) Date of publication of application: **18.02.2026**
(21) Application number: 24830689.6
(22) Date of filing: 24.06.2024
(51) Int. Cl.: H04W 64/00, H04L 5/00

(54) **POSITIONING METHOD AND RELATED APPARATUS**

(30) Priority: 27.06.2023 CN 202310772477
(71) Applicant: Huawei Technologies Co., Ltd., Shenzhen, Guangdong 518129 (CN)
(72) Inventor: LI, Cheng, Shenzhen, Guangdong 518129 (CN)
(74) Representative: Gill Jennings & Every LLP
(86) International application number: PCT/CN2024/100917
(87) International publication number: WO 2025/002045

(57) **Abstract**

Embodiments of this application disclose a positioning method and a related apparatus, to cause a first apparatus to receive at least two pieces of first frequency information from a network device, and send at least two positioning reference signals based on the at least two pieces of first frequency information. This helps increase a transmission bandwidth used by the first apparatus for sending the positioning reference signal, thereby improving positioning accuracy. The method in embodiments of this application includes: The first apparatus receives at least two pieces of first frequency information from the network device, where the at least two pieces of first frequency information include first frequency information 1 and first frequency information 2, the first frequency information 1 is used by the first apparatus for sending a first positioning reference signal, and the first frequency information 2 is used by the first apparatus for sending a second positioning reference signal; and the first apparatus sends at least two positioning reference signals based on the at least two pieces of first frequency information, where the at least two positioning reference signals include the first positioning reference signal and the second positioning reference signal.

## Description

This application claims priority to Chinese Patent Application No. 202310772477.0, filed with the China National Intellectual Property Administration on June 27, 2023 and entitled "POSITIONING METHOD AND RELATED APPARATUS", which is incorporated herein by reference in its entirety.

### TECHNICAL FIELD

This application relates to the field of communication technologies, and in particular, to a positioning method and a related apparatus.

### BACKGROUND

An internet of things (internet of things, IoT) is a communication system including a new energy-saving tag (tag) terminal and a reader. The reader may remotely read information about the tag terminal. The internet of things has low maintenance costs, and includes miniaturized devices. For example, the internet of things is a passive internet of things or a semi-passive internet of things. Therefore, the internet of things is widely applied to industries such as manufacturing, logistics, electric power, and animal husbandry. For example, the internet of things may be applied to a warehousing scenario. The reader needs to measure a location of the tag terminal, to facilitate material query and high-value goods management, and implement storage bin-level positioning.

However, a transmission bandwidth currently supported by the tag terminal is limited, and typically, the tag terminal supports 180 kHz (kilohertz). At the transmission bandwidth, positioning accuracy is approximately 30 m, which cannot meet a positioning accuracy requirement in current vertical industries (for example, a positioning requirement for the positioning accuracy being below 10 m). Therefore, how to improve the positioning accuracy of the tag terminal is a problem to be urgently resolved currently.

### SUMMARY

This application provides a positioning method and a related apparatus, to cause a first apparatus to receive at least two pieces of first frequency information from a network device, and send at least two positioning reference signals based on the at least two pieces of first frequency information. This helps increase a transmission bandwidth used by the first apparatus for sending the positioning reference signal, thereby improving positioning accuracy.

A first aspect of this application provides a positioning method, including:
A first apparatus receives at least two pieces of first frequency information from a network device, where the at least two pieces of first frequency information include first frequency information 1 and first frequency information 2, the first frequency information 1 is used by the first apparatus for sending a first positioning reference signal, and the first frequency information 2 is used by the first apparatus for sending a second positioning reference signal; and the first apparatus sends at least two positioning reference signals based on the at least two pieces of first frequency information, where the at least two positioning reference signals include the first positioning reference signal and the second positioning reference signal.

A second aspect of this application provides a positioning method, including:
A first apparatus obtains at least two pieces of first frequency information, where the at least two pieces of first frequency information include first frequency information 1 and first frequency information 2, the first frequency information 1 is used by the first apparatus for sending a first positioning reference signal, and the first frequency information 2 is used by the first apparatus for sending a second positioning reference signal; and the first apparatus sends at least two positioning reference signals based on the at least two pieces of first frequency information, where the at least two positioning reference signals include the first positioning reference signal and the second positioning reference signal.

According to the technical solution in the first aspect or the second aspect, the first apparatus may receive the at least two pieces of first frequency information configured by the network device for the first apparatus; or the first apparatus obtains the at least two pieces of first frequency information. The first apparatus sends the at least two positioning reference signals based on the at least two pieces of first frequency information, where the at least two positioning reference signals include the first positioning reference signal and the second positioning reference signal. This helps increase a transmission bandwidth used by the first apparatus for sending the positioning reference signal, thereby improving positioning accuracy.

A third aspect of this application provides a positioning method, including:
A network device sends at least two pieces of first frequency information to a first apparatus, where the at least two pieces of first frequency information include first frequency information 1 and first frequency information 2, the first frequency information 1 is used by the first apparatus for sending a first positioning reference signal, and the first frequency information 2 is used by the first apparatus for sending a second positioning reference signal; and the network device receives at least two positioning reference signals from the first apparatus, where the at least two positioning reference signals include the first positioning reference signal and the second positioning reference signal, and the at least two positioning reference signals are determined based on the at least two pieces of first frequency information.

It can be learned from the foregoing technical solution that the network device sends the at least two pieces of first frequency information to the first apparatus. The network device receives the at least two positioning reference signals from the first apparatus, where the at least two positioning reference signals include the first positioning reference signal and the second positioning reference signal, and the at least two positioning reference signals are determined based on the at least two pieces of first frequency information. This helps increase a transmission bandwidth used by the first apparatus for sending the positioning reference signal, thereby improving positioning accuracy.

According to any one of the first aspect to the third aspect, in a possible implementation, the first apparatus is a tag terminal, and the network device is a network device having a tag reader function. In this implementation, specific implementations of the first apparatus and the network device are illustrated, to provide a scenario to which this application is applicable, and position the tag terminal.

According to any one of the first aspect to the third aspect, in a possible implementation, the tag terminal is a passive tag, a semi-passive tag, or an active tag. Some possible forms of the tag terminal are illustrated, to enrich implementations of the solutions.

According to any one of the first aspect to the third aspect, in a possible implementation, the first positioning reference signal is a positioning reference signal sequence or a first subsequence, the second positioning reference signal is the positioning reference signal sequence or a second subsequence, and the first subsequence and the second subsequence are a plurality of subsequences obtained by segmenting the positioning reference signal sequence. In this implementation, two possible implementations of each of the first positioning reference signal and the second positioning reference signal are illustrated. It can be learned that the positioning reference signal may be a positioning reference signal sequence, or a subsequence obtained by segmenting the positioning reference signal sequence. Therefore, the implementations of the solutions are enriched.

According to any one of the first aspect to the third aspect, in a possible implementation, the first frequency information 1 indicates a frequency conversion sequence or a frequency offset value used by the first apparatus for sending the first positioning reference signal. In this implementation, content specifically indicated by the first frequency information 1 is illustrated, so that the first apparatus determines a corresponding sending frequency based on the first frequency information 1, and sends the first positioning reference signal at the sending frequency. This helps the first apparatus send a corresponding positioning reference signal at a specific frequency, and helps increase a transmission bandwidth used by the first apparatus for sending the positioning reference signal. For example, the first apparatus sends different positioning reference signals at different frequencies, and the network device jointly measures the positioning reference signals sent by the first apparatus for a plurality of times, to obtain a corresponding measurement result. This helps increase a positioning bandwidth, thereby improving positioning accuracy.

According to any one of the first aspect to the third aspect, in a possible implementation, the first frequency information 2 indicates a frequency conversion sequence or a frequency offset value used by the first apparatus for sending the second positioning reference signal; and the frequency conversion sequence used by the first apparatus for sending the first positioning reference signal is different from the frequency conversion sequence used by the first apparatus for sending the second positioning reference signal; or the frequency offset value used by the first apparatus for sending the first positioning reference signal is different from the frequency offset value used by the first apparatus for sending the second positioning reference signal.

In this implementation, the frequency conversion sequence used by the first apparatus for sending the first positioning reference signal is different from the frequency conversion sequence used by the first apparatus for sending the second positioning reference signal. Alternatively, the frequency offset value used by the first apparatus for sending the first positioning reference signal is different from the frequency offset value used by the first apparatus for sending the second positioning reference signal. A sending frequency of the first positioning reference signal is different from a sending frequency of the second positioning reference signal. The network device jointly measures the first positioning reference signal and the second positioning reference signal to obtain a corresponding measurement result. This helps increase a positioning bandwidth, thereby improving positioning accuracy.

According to any one of the first aspect to the third aspect, in a possible implementation, the at least two pieces of first frequency information include a first sequence, and the first sequence indicates a quantity of times of sending the positioning reference signal by the first apparatus and frequency information used for each time of sending the positioning reference signal. In this implementation, the first sequence indicates the quantity of times of sending the positioning reference signal by the first apparatus and the frequency information used for each time of sending the positioning reference signal. This helps the first apparatus send the positioning reference signal for a plurality of times, and helps increase a coverage area of the positioning reference signal sent by the first apparatus. Further, the first sequence indicates the frequency information used by the first apparatus for each time of sending the positioning reference signal. Therefore, the corresponding frequency information is configured for each time of sending the positioning reference signal by the first apparatus. This helps implement that different positioning reference signals of the first apparatus have different frequencies, and the network device jointly measures the positioning reference signals sent by the first apparatus for a plurality of times, to obtain a corresponding measurement result. This helps increase a positioning bandwidth, thereby improving positioning accuracy.

According to any one of the first aspect to the third aspect, in a possible implementation, a length of the first sequence indicates the quantity of times of sending the positioning reference signal by the first apparatus. Therefore, the first apparatus is indicated to send the positioning reference signal for the corresponding quantity of times. This helps increase a coverage area of the positioning reference signal sent by the first apparatus, thereby improving positioning accuracy. Further, the network device indicates, by using the first sequence, the quantity of times of sending the positioning reference signal by the first apparatus, and further indicates the frequency information used by the first apparatus for each time of sending the positioning reference signal. Indication overheads are low.

According to any one of the first aspect to the third aspect, in a possible implementation, the first sequence includes one or more numerical values, and a quantity of numerical values included in the first sequence is the quantity of times of sending the positioning reference signal by the first apparatus. In this implementation, the length of the first sequence is represented by the quantity of numerical values included in the first sequence. Therefore, the quantity of times of sending the positioning reference signal is indicated to the first apparatus.

According to any one of the first aspect to the third aspect, in a possible implementation, in the first sequence, each of the one or more numerical values corresponds to one time of sending the positioning reference signal, and each of the one or more numerical values indicates frequency information used by the first apparatus for one time of sending the positioning reference signal corresponding to the numerical value. Therefore, each numerical value in the first sequence indicates the frequency information used by the first apparatus for sending the positioning reference signal. The frequency information used by the first apparatus for each time of sending the positioning reference signal is configured. This helps increase a transmission bandwidth used by the first apparatus for sending the positioning reference signal, thereby improving positioning accuracy.

According to any one of the first aspect to the third aspect, in a possible implementation, in the first sequence, each of the one or more numerical values indicates a frequency offset value used by the first apparatus for one time of sending the positioning reference signal corresponding to the numerical value; or in the first sequence, each of the one or more numerical values indicates an index of a frequency conversion sequence used by the first apparatus for one time of sending the positioning reference signal corresponding to the numerical value. In this implementation, a meaning indicated by a numerical value in the first sequence is illustrated, and may be specifically a frequency offset value or an index of a frequency conversion sequence. This helps the first apparatus send the positioning reference signal at a corresponding frequency, and helps the first apparatus send the positioning reference signal each time by using a different frequency. This helps increase a transmission bandwidth for the positioning reference signal, thereby improving positioning accuracy.

According to any one of the first aspect to the third aspect, in a possible implementation, the at least two pieces of first frequency information include a second sequence, and a length of the second sequence indicates a quantity of segments obtained by segmenting the positioning reference signal sequence by the first apparatus. Therefore, the quantity of segments obtained by segmenting the positioning reference signal sequence by the first apparatus is indicated. This helps the first apparatus send a corresponding subsequence by using corresponding frequency information, where the subsequence is obtained by segmenting the positioning reference signal sequence. This helps increase a transmission bandwidth used by the first apparatus for sending the positioning reference signal, thereby improving positioning accuracy.

According to any one of the first aspect to the third aspect, in a possible implementation, the second sequence includes one or more numerical values, and a quantity of numerical values included in the second sequence is a quantity of segments obtained by segmenting the positioning reference signal sequence by the first apparatus. In this implementation, the length of the second sequence is represented by the quantity of numerical values included in the second sequence.

According to any one of the first aspect to the third aspect, in a possible implementation, in the second sequence, each of the one or more numerical values corresponds to one subsequence, different numerical values correspond to different subsequences, the subsequences are obtained by segmenting the positioning reference signal sequence by the first apparatus; and in the second sequence, each of the one or more numerical values indicates an index of a frequency conversion sequence used by the first apparatus for sending the subsequence corresponding to the numerical value; or in the second sequence, each of the one or more numerical values indicates a frequency offset value used by the first apparatus for sending the subsequence corresponding to the numerical value. Therefore, each numerical value in the second sequence indicates frequency information used by the first apparatus for sending the subsequence. The frequency information used by the second apparatus for each time of sending the subsequence is configured. This helps increase a transmission bandwidth used by the first apparatus for sending the positioning reference signal, thereby improving positioning accuracy.

According to the third aspect, in a possible implementation, the method further includes: The network device sends at least two pieces of second frequency information to a second apparatus, where the at least two pieces of second frequency information include second frequency information 1 and second frequency information 2, the second frequency information 1 is used by the second apparatus for sending a third positioning reference signal, and the second frequency information 2 is used by the second apparatus for sending a fourth positioning reference signal; and the network device receives at least two positioning reference signals from the second apparatus, where the at least two positioning reference signals include the third positioning reference signal and the fourth positioning reference signal, and the at least two positioning reference signals are determined based on the at least two pieces of second frequency information. In this implementation, the network device may alternatively configure the at least two pieces of second frequency information for the second apparatus, so that the second apparatus sends the at least two positioning reference signals. This helps increase a transmission bandwidth used by the second apparatus for sending the positioning reference signal, thereby improving positioning accuracy.

According to any one of the first aspect to the third aspect, in a possible implementation, the first frequency information 1 indicates the frequency conversion sequence used by the first apparatus for sending the first positioning reference signal, the second frequency information 1 indicates a frequency conversion sequence used by the second apparatus for sending the third positioning reference signal, and the frequency conversion sequence used by the first apparatus for sending the first positioning reference signal is different from the frequency conversion sequence used by the second apparatus for sending the third positioning reference signal. It can be learned that the frequency conversion sequence used by the first apparatus for sending the first positioning reference signal is different from the frequency conversion sequence used by the second apparatus for sending the third positioning reference signal. Therefore, when the network device receives the positioning reference signals from the first apparatus and from the second apparatus simultaneously, the network device may parse and obtain the positioning reference signals from the first apparatus and from the second apparatus. In this way, the network device may position the first apparatus and the second apparatus simultaneously, to implement multi-user concurrency and increase a system capacity, thereby improving positioning efficiency.

According to any one of the first aspect to the third aspect, in a possible implementation, the first frequency information 1 indicates the frequency offset value used by the first apparatus for sending the first positioning reference signal, the second frequency information 1 indicates a frequency offset value used by the second apparatus for sending the third positioning reference signal, and the frequency offset value used by the first apparatus for sending the first positioning reference signal is different from the frequency offset value used by the second apparatus for sending the third positioning reference signal. In this implementation, the frequency offset value used by the first apparatus for sending the first positioning reference signal is different from the frequency offset value used by the second apparatus for sending the third positioning reference signal. This helps the network device parse positioning reference signals respectively sent by a plurality of apparatuses simultaneously. In this way, the network device may position the plurality of apparatuses simultaneously, to implement multi-user concurrency and increase a system capacity, thereby improving positioning efficiency.

A fourth aspect of this application provides a first apparatus, including:
a transceiver module, configured to: receive at least two pieces of first frequency information from a communication apparatus, where the at least two pieces of first frequency information include first frequency information 1 and first frequency information 2, the first frequency information 1 is used by the first apparatus for sending a first positioning reference signal, and the first frequency information 2 is used by the first apparatus for sending a second positioning reference signal; and send at least two positioning reference signals based on the at least two pieces of first frequency information, where the at least two positioning reference signals include the first positioning reference signal and the second positioning reference signal.

A fifth aspect of this application provides a first apparatus, including:
a processing module, configured to obtain at least two pieces of first frequency information, where the at least two pieces of first frequency information include first frequency information 1 and first frequency information 2, the first frequency information 1 is used by the first apparatus for sending a first positioning reference signal, and the first frequency information 2 is used by the first apparatus for sending a second positioning reference signal; and
a transceiver module, configured to send at least two positioning reference signals based on the at least two pieces of first frequency information, where the at least two positioning reference signals include the first positioning reference signal and the second positioning reference signal.

A sixth aspect of this application provides a communication apparatus, including:
a transceiver module, configured to: send at least two pieces of first frequency information to a first apparatus, where the at least two pieces of first frequency information include first frequency information 1 and first frequency information 2, the first frequency information 1 is used by the first apparatus for sending a first positioning reference signal, and the first frequency information 2 is used by the first apparatus for sending a second positioning reference signal; and receive at least two positioning reference signals from the first apparatus, where the at least two positioning reference signals include the first positioning reference signal and the second positioning reference signal, and the at least two positioning reference signals are determined based on the at least two pieces of first frequency information.

According to any one of the fourth aspect to the sixth aspect, in a possible implementation, the first apparatus is a tag terminal, and the communication apparatus is a communication apparatus having a tag reader function.

According to any one of the fourth aspect to the sixth aspect, in a possible implementation, the tag terminal is a passive tag, a semi-passive tag, or an active tag.

According to any one of the fourth aspect to the sixth aspect, in a possible implementation, the first positioning reference signal is a positioning reference signal sequence or a first subsequence, the second positioning reference signal is the positioning reference signal sequence or a second subsequence, and the first subsequence and the second subsequence are a plurality of subsequences obtained by segmenting the positioning reference signal sequence.

According to any one of the fourth aspect to the sixth aspect, in a possible implementation, the first frequency information 1 indicates a frequency conversion sequence or a frequency offset value used by the first apparatus for sending the first positioning reference signal.

According to any one of the fourth aspect to the sixth aspect, in a possible implementation, the first frequency information 2 indicates a frequency conversion sequence or a frequency offset value used by the first apparatus for sending the second positioning reference signal; and the frequency conversion sequence used by the first apparatus for sending the first positioning reference signal is different from the frequency conversion sequence used by the first apparatus for sending the second positioning reference signal; or the frequency offset value used by the first apparatus for sending the first positioning reference signal is different from the frequency offset value used by the first apparatus for sending the second positioning reference signal.

According to any one of the fourth aspect to the sixth aspect, in a possible implementation, the at least two pieces of first frequency information include a first sequence, and the first sequence indicates a quantity of times of sending the positioning reference signal by the first apparatus and frequency information used for each time of sending the positioning reference signal.

According to any one of the fourth aspect to the sixth aspect, in a possible implementation, a length of the first sequence indicates the quantity of times of sending the positioning reference signal by the first apparatus.

According to any one of the fourth aspect to the sixth aspect, in a possible implementation, the first sequence includes one or more numerical values, and a quantity of numerical values included in the first sequence is the quantity of times of sending the positioning reference signal by the first apparatus.

According to any one of the fourth aspect to the sixth aspect, in a possible implementation, in the first sequence, each of the one or more numerical values corresponds to one time of sending the positioning reference signal, and each of the one or more numerical values indicates frequency information used by the first apparatus for one time of sending the positioning reference signal corresponding to the numerical value.

According to any one of the fourth aspect to the sixth aspect, in a possible implementation, in the first sequence, each of the one or more numerical values indicates a frequency offset value used by the first apparatus for one time of sending the positioning reference signal corresponding to the numerical value; or each of the one or more numerical values indicates an index of a frequency conversion sequence used by the first apparatus for one time of sending the positioning reference signal corresponding to the numerical value.

According to any one of the fourth aspect to the sixth aspect, in a possible implementation, the at least two pieces of first frequency information include a second sequence, and a length of the second sequence indicates a quantity of segments obtained by segmenting the positioning reference signal sequence by the first apparatus.

According to any one of the fourth aspect to the sixth aspect, in a possible implementation, the second sequence includes one or more numerical values, and a quantity of numerical values included in the second sequence is a quantity of segments obtained by segmenting the positioning reference signal sequence by the first apparatus.

According to any one of the fourth aspect to the sixth aspect, in a possible implementation, in the second sequence, each of the one or more numerical values corresponds to one subsequence, different numerical values correspond to different subsequences, the subsequences are obtained by segmenting the positioning reference signal sequence by the first apparatus; and in the second sequence, each of the one or more numerical values indicates an index of a frequency conversion sequence used by the first apparatus for sending the subsequence corresponding to the numerical value; or in the second sequence, each of the one or more numerical values indicates a frequency offset value used by the first apparatus for sending the subsequence corresponding to the numerical value.

According to the sixth aspect, in a possible implementation, the transceiver module is further configured to: send at least two pieces of second frequency information to a second apparatus, where the at least two pieces of second frequency information include second frequency information 1 and second frequency information 2, the second frequency information 1 is used by the second apparatus for sending a third positioning reference signal, and the second frequency information 2 is used by the second apparatus for sending a fourth positioning reference signal; and receive at least two positioning reference signals from the second apparatus, where the at least two positioning reference signals include the third positioning reference signal and the fourth positioning reference signal, and the at least two positioning reference signals are determined based on the at least two pieces of second frequency information.

According to any one of the fourth aspect to the sixth aspect, in a possible implementation, the first frequency information 1 indicates the frequency conversion sequence used by the first apparatus for sending the first positioning reference signal, the second frequency information 1 indicates a frequency conversion sequence used by the second apparatus for sending the third positioning reference signal, and the frequency conversion sequence used by the first apparatus for sending the first positioning reference signal is different from the frequency conversion sequence used by the second apparatus for sending the third positioning reference signal.

According to any one of the fourth aspect to the sixth aspect, in a possible implementation, the first frequency information 1 indicates the frequency offset value used by the first apparatus for sending the first positioning reference signal, the second frequency information 1 indicates a frequency offset value used by the second apparatus for sending the third positioning reference signal, and the frequency offset value used by the first apparatus for sending the first positioning reference signal is different from the frequency offset value used by the second apparatus for sending the third positioning reference signal.

A seventh aspect of this application provides a first apparatus. The first apparatus includes a processor and a memory. The memory stores a computer program or computer instructions, and the processor is configured to invoke and run the computer program or the computer instructions stored in the memory, to cause the processor to implement any one of the implementations of the first aspect or the second aspect.

Optionally, the first apparatus further includes a transceiver, and the processor is configured to control the transceiver to send and receive signals.

An eighth aspect of this application provides a first apparatus. The first apparatus includes a processor. The processor is configured to invoke a computer program or computer instructions stored in a memory, to cause the processor to implement any one of the implementations of the first aspect or the second aspect.

Optionally, the first apparatus further includes a transceiver, and the processor is configured to control the transceiver to send and receive signals.

A ninth aspect of this application provides a first apparatus. The first apparatus includes a processor, and the processor is configured to perform any one of the implementations of the first aspect or the second aspect.

A tenth aspect of this application provides a communication apparatus. The communication apparatus includes a processor and a memory. The memory stores a computer program or computer instructions, and the processor is configured to invoke and run the computer program or the computer instructions stored in the memory, to cause the processor to implement any one of the implementations of the third aspect.

Optionally, the communication apparatus further includes a transceiver, and the processor is configured to control the transceiver to send and receive signals.

An eleventh aspect of this application provides a communication apparatus. The communication apparatus includes a processor. The processor is configured to invoke a computer program or computer instructions in a memory, to cause the processor to implement any one of the implementations of the third aspect.

Optionally, the communication apparatus further includes a transceiver, and the processor is configured to control the transceiver to send and receive signals.

A twelfth aspect of this application provides a communication apparatus. The first apparatus includes a processor, and the processor is configured to perform any one of the implementations of the third aspect.

A thirteenth aspect of this application provides a computer program product including instructions. When the computer program product runs on a computer, the computer is caused to perform any one of the implementations of the first aspect to the third aspect.

A fourteenth aspect of this application provides a computer-readable storage medium, including computer instructions. When the instructions are run on a computer, the computer is caused to perform any one of the implementations of the first aspect to the third aspect.

A fifteenth aspect of this application provides a chip apparatus. The chip apparatus includes a processor, configured to invoke a computer program or computer instructions in a memory, to cause the processor to perform any one of the implementations of the first aspect to the third aspect.

Optionally, the processor is coupled to the memory through an interface.

A sixteenth aspect of this application provides a communication system. The communication system includes the first apparatus according to the fourth aspect and the communication apparatus according to the sixth aspect.

It can be learned from the foregoing technical solutions that the first apparatus receives the at least two pieces of first frequency information from the network device. The at least two pieces of first frequency information include the first frequency information 1 and the first frequency information 2. The first frequency information 1 is used by the first apparatus for sending the first positioning reference signal. The first frequency information 2 is used by the first apparatus for sending the second positioning reference signal. Then, the first apparatus sends the at least two positioning reference signals based on the at least two pieces of first frequency information, where the at least two positioning reference signals include the first positioning reference signal and the second positioning reference signal. It can be learned that the first apparatus may receive the at least two pieces of first frequency information configured by the network device for the first apparatus. The first apparatus sends the at least two positioning reference signals based on the at least two pieces of first frequency information, where the at least two positioning reference signals include the first positioning reference signal and the second positioning reference signal. This helps increase a transmission bandwidth used by the first apparatus for sending the positioning reference signal, thereby improving positioning accuracy.

### BRIEF DESCRIPTION OF DRAWINGS

FIG. 1 is a diagram of a communication system according to an embodiment of this application;
FIG. 2 is a diagram of a working principle of a tag terminal according to an embodiment of this application;
FIG. 3 is a diagram of another working principle of a tag terminal according to an embodiment of this application;
FIG. 4 is a diagram of a structure of a network device according to an embodiment of this application;
FIG. 5 is a diagram of an embodiment of a positioning method according to an embodiment of this application;
FIG. 6 is a diagram of a waveform of a carrier signal sent by a network device according to an embodiment of this application;
FIG. 7 is a diagram of a waveform of a positioning reference signal sequence according to an embodiment of this application;
FIG. 8 is a diagram of waveforms of positioning reference signal sequences sent by tag terminals 1 to 3 in a periodicity 1 to a periodicity 3 respectively according to an embodiment of this application;
FIG. 9 is another diagram of a waveform of a positioning reference signal sequence according to an embodiment of this application;
FIG. 10 is a diagram of waveforms of positioning reference signal sequences sent by tag terminals 1 to 3 in a periodicity 1 to a periodicity 3 respectively according to an embodiment of this application;
FIG. 11 is a diagram of a plurality of subsequences of a positioning reference signal sequence according to an embodiment of this application;
FIG. 12 is a diagram of waveforms of three subsequences of a positioning reference signal sequence sent by each of tag terminals 1 to 3 according to an embodiment of this application;
FIG. 13 is another diagram of a plurality of subsequences of a positioning reference signal sequence according to an embodiment of this application;
FIG. 14 is another diagram of waveforms of three subsequences of a positioning reference signal sequence sent by each of tag terminals 1 to 3 according to an embodiment of this application;
FIG. 15 is a diagram of a scenario of a positioning method according to an embodiment of this application;
FIG. 16 is a diagram of another scenario of a positioning method according to an embodiment of this application;
FIG. 17 is a diagram of a structure of a first apparatus according to an embodiment of this application;
FIG. 18 is a diagram of a structure of a communication apparatus according to an embodiment of this application;
FIG. 19 is a diagram of another structure of a first apparatus according to an embodiment of this application;
FIG. 20 is a diagram of another structure of a communication apparatus according to an embodiment of this application; and
FIG. 21 is a diagram of a simplified structure of a base station according to an embodiment of this application.

### DESCRIPTION OF EMBODIMENTS

Embodiments of this application provide a positioning method and a related apparatus, to cause a first apparatus to receive at least two pieces of first frequency information from a network device, and send at least two positioning reference signals based on the at least two pieces of first frequency information. This helps increase a transmission bandwidth used by the first apparatus for sending the positioning reference signal, thereby improving positioning accuracy.

The following clearly and completely describes the technical solutions in embodiments of this application with reference to the accompanying drawings in embodiments of this application. It is clear that the described embodiments are merely some embodiments rather than all embodiments of this application. All other embodiments obtained by a person skilled in the art based on embodiments of this application without creative efforts shall fall within the protection scope of this application.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

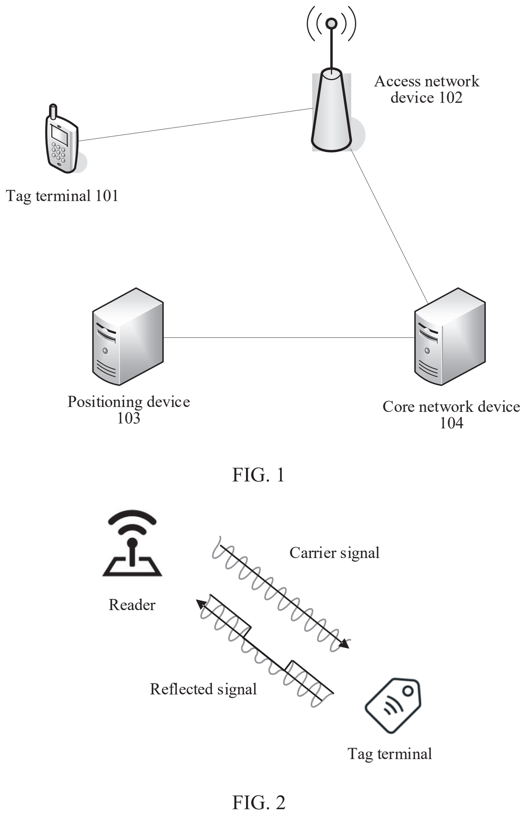

FIG. 1 is a diagram of a communication system according to an embodiment of this application. The communication system includes a tag terminal 101 and an access network device 102. Optionally, the communication system further includes a positioning device 103 and a core network device 104.

The access network device 102 is a base station integrated with a reader, or a base station having a reader function. The access network device 102 supports communication with the tag terminal 101. For the tag terminal, refer to related descriptions below.

The positioning device 103 is configured to perform positioning calculation and management on the tag terminal 101. For example, the positioning device 103 may be a location management function (location management function, LMF).

The core network device 104 is equivalent to a router for communication between the access network device 102 and the positioning device 103. The core network device 104 is used for access control, registration management, service management, mobility management, and the like for the tag terminal 101 to access a network. For example, the core network device 104 is an access and mobility management function (access and mobility management function, AMF).

FIG. 1 shows only an example in which the communication system includes the access network device 102. During actual application, the communication system may further include more tag terminals and more access network devices. This is not specifically limited in this application.

It should be noted that the AMF is responsible for the access control, the registration management, the service management, the mobility management, and the like for the tag terminal to access the network. A name of the AMF may change with evolution of the communication system. In a current communication system or a future communication system, a functional network element that has another name and that has a function similar to that of the AMF may be understood as the AMF in this application, and is applicable to a positioning method provided in embodiments of this application.

In this application, the LMF is a name in the current communication system. In the future communication system, the name of the LMF may change with evolution of the communication system. Therefore, the LMF is referred to as a positioning device below to describe the technical solutions in this application. The positioning device is configured to perform positioning calculation on a location of the tag terminal. In the current communication system or the future communication system, a functional network element that has another name and that has a function similar to that of the positioning device may be understood as the positioning device in this application, and is applicable to the positioning method provided in this application.

The communication system provided in this application includes a first apparatus and a network device. Optionally, the communication system further includes a second apparatus. Further, optionally, the communication system further includes a positioning device.

In this application, the first apparatus is a low-capability apparatus. For example, the first apparatus cannot perform a complex signal processing algorithm. For example, the first apparatus cannot generate a sequence used for generating a positioning reference signal. The first apparatus may be an internet-of-things terminal or a tag terminal. The second apparatus is similar to the first apparatus. For details, refer to related descriptions of the first apparatus.

The following describes some functions of the first apparatus by using the tag terminal as an example.

The tag terminal has a read capability, and can read corresponding data or information from a memory address of the tag terminal. The tag terminal may be excited to send the positioning reference signal.

Optionally, the tag terminal further has at least one of the following capabilities: a write capability, a counting capability, a timing capability, or a capability of actively sending a signal. The write capability means that the tag terminal can write data or information into a memory of the tag terminal. The counting capability means that the tag terminal can perform counting. The timing capability means that the tag terminal can perform timing. The capability of actively sending the signal means that the tag terminal can actively generate a corresponding carrier for sending the signal.

The tag terminal may be an internet-of-things terminal or a tag terminal, for example, a passive tag terminal (passive Tag), a semi-passive tag terminal (semi-passive Tag), an active tag terminal (active Tag), or even a radio frequency identification (radio frequency identification, RFID) tag. This is not specifically limited in this application.

The following describes the passive tag terminal, the semi-passive tag terminal, and the active tag terminal.

The passive tag terminal provides energy for the passive tag terminal by receiving a signal. For example, the passive tag terminal receives an electromagnetic wave, and converts the electromagnetic wave into electric energy, to provide the energy for a passive tag. The passive tag terminal cannot actively send a signal, and can send a signal only after being excited. In other words, the passive tag terminal cannot actively generate a carrier for carrying a to-be-sent signal.

The semi-passive tag terminal supports solar energy and the like in providing energy for the semi-passive tag terminal. The semi-passive tag terminal supports amplifying a transmit signal and supports power consumption at a level of hundreds of microwatts. For example, the semi-passive tag terminal supports power consumption at a level of 100 µW (microwatts). The semi-passive tag terminal cannot actively send a signal, and can send a signal only after being excited. In other words, the semi-passive tag terminal cannot actively generate a carrier for carrying a to-be-sent signal.

For example, as shown in FIG. 2, the tag terminal is a passive tag or a semi-passive tag. The tag terminal receives a carrier signal sent by a reader. The tag terminal reflects the carrier signal to obtain a reflected signal. The reflected signal carries related information of the tag terminal and/or a positioning reference signal sequence. The tag terminal feeds back the reflected signal to the network device.

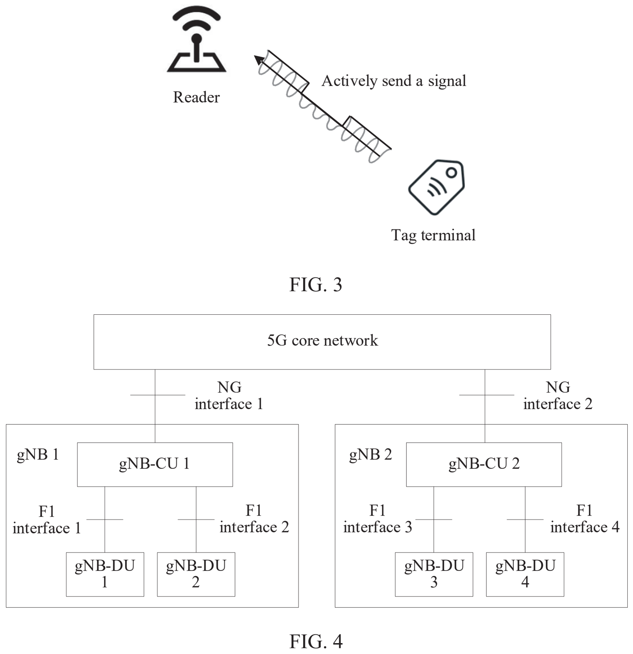

The active tag terminal supports solar energy, a battery, and the like in providing energy for the active tag terminal. The active tag terminal supports amplifying a transmit signal and supports power consumption at a level of hundreds of microwatts. For example, the active tag terminal supports power consumption at a level of 500 µW, and can actively send a signal. In other words, the active tag terminal can actively generate a carrier for carrying a to-be-sent signal. For example, as shown in FIG. 3, the tag terminal is an active tag. The tag terminal may actively send a signal. The signal sent by the tag terminal carries related information of the tag terminal and/or a positioning reference signal sequence. The tag terminal feeds back the signal to the network device.

The tag terminal includes a handheld device, a vehicle-mounted device, an internet-of-things device, a wearable device, or the like that has a wireless communication function. Currently, some examples of the tag terminal are: a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in telemedicine, a wireless terminal in a smart grid (smart grid), a wireless terminal in transportation safety (transportation safety), a wireless terminal in a smart city (smart city), a wireless terminal in a smart home (smart home), or the like. It should be noted that the tag terminal may alternatively be the foregoing device or apparatus, or a component (for example, a chip), a module, or a unit in the foregoing device or apparatus. This is not specifically limited in this application.

The network device can control a tag terminal or an internet-of-things terminal device. For example, the network device is a reader (reader), or the network device is a device having a tag reader function, that is, the network device is a device integrated with the reader. The network device supports communication with the tag terminal. For example, the network device has an inventory function and an excitation function. To be specific, the network device supports inventorying of the tag terminal. The network device supports exciting the tag terminal to send a signal. The network device further has a function of reading data or information of the tag terminal, and the network device further supports writing data or information into the tag terminal. For example, the network device writes, to the tag terminal, frequency information used for sending a positioning reference signal.

Optionally, the network device may be an access network device, a core network device, or a roadside unit (roadside unit, RSU). The access network device is a device that is deployed in a radio access network and that provides a wireless communication function for the tag terminal. For example, the access network device includes a base station. The base station includes a macro base station, a micro base station (also referred to as a small cell), a relay station, an access point (access point, AP), a wearable device, a vehicle-mounted device, and the like in various forms. The base station may further include a transmission reception point (transmission reception point, TRP), a transmission measurement function (transmission measurement function, TMF), and the like. For example, the base station mentioned in this application may be a base station in new radio (new radio, NR). The base station in 5G NR may further include a transmission reception point (transmission reception point, TRP), a transmission point (transmission point, TP), a base station (gNodeB, gNB) in a 5G communication system, an evolved NodeB (evolved NodeB, eNB or eNodeB) in a long term evolution (long term evolution, LTE) system, or a base station or a node in a future communication system, for example, a base station in a 6G communication system.

The core network device is responsible for access control, registration management, service management, mobility management, and the like for the tag terminal to access a network. For example, the core network device is the AMF.

The RSU is a roadside unit deployed on a roadside, meets a sidelink communication and/or positioning-related protocol, and is a device or an apparatus that can provide a wireless communication function for a tag terminal. The RSU may be a roadside station, an access point, a sidelink device, or the like in various forms. This is not specifically limited in this application.

It should be noted that the network device may alternatively be the foregoing device or apparatus, or a component, a module, or a unit in the foregoing device or apparatus. This is not specifically limited in this application. For example, the network device may be one or more modules in the foregoing device.

The positioning device is configured to perform positioning calculation and management on the location of the tag terminal. For example, the positioning device is the LMF.

The following describes a possible structure of the access network device in FIG. 1. Herein, an example in which the access network device includes the gNB is used for description. This is also applicable to other types of access network devices.

FIG. 4 is a diagram of a structure of an access network device according to an embodiment of this application. For example, the access network device is a gNB. Refer to FIG. 4. In a 5G communication system, gNBs are connected through an Xn interface, and the gNB is connected to a 5th generation mobile communication technology core (5th generation mobile communication technology core, 5GC) network through an NG interface. As shown in FIG. 4, a gNB 1 and a gNB 2 are connected through the Xn interface. The gNB 1 is connected to the 5GC through an NG interface 1, and the gNB 2 is connected to the 5GC through an NG interface 2.

The gNB may include a central unit (central unit, CU) and a distributed unit (distributed unit, DU). To be specific, functions of a base station are split, a part of the functions of the base station is deployed on a gNB-CU, and a remaining function is deployed on a gNB-DU. A plurality of gNB-DUs share one gNB-CU. This can reduce costs and facilitate network expansion. For example, as shown in FIG. 4, the gNB 1 includes a gNB-CU 1, a gNB-DU 1, and a gNB-DU 2. The gNB-CU 1 is connected to the gNB-DU 1 through an F1 interface 1, and is connected to the gNB-DU 2 through an F1 interface 2. A structure of the gNB 2 is similar to a structure of the gNB 1. Details are not described one by one herein again.

FIG. 4 is merely an example. One gNB-CU may be connected to one or more gNB-DUs. This is not specifically limited in this application.

The gNB-CU and the gNB-DU may be split based on a protocol stack. For example, a protocol stack of a radio resource control (radio resource control, RRC) layer, a service data adaptation protocol (service data adaptation protocol, SDAP) layer, and a packet data convergence protocol (packet data convergence protocol, PDCP) layer is deployed on the gNB-CU. A protocol stack of a radio link control (radio link control, RLC) layer, a media access control (media access control, MAC) layer, and a physical (physical, PHY) layer is deployed on the gNB-DU. The gNB-CU and the gNB-DU are connected through an F1 interface. The foregoing examples are merely intended to describe the gNB-CU and the gNB-DU. Protocol stacks deployed on the gNB-CU and the gNB-DU are not limited in this application.

In this application, in the following solution in which the access network device uses a structure of the CU and the DU, the gNB-CU is referred to as the CU for short, and the gNB-DU is referred to as the DU for short.

Currently, a transmission bandwidth currently supported by the tag terminal is limited, and typically, the tag terminal supports 180 kHz (kilohertz). At the transmission bandwidth, positioning accuracy is approximately 30 m, which cannot meet a positioning accuracy requirement in current vertical industries (for example, a positioning requirement for the positioning accuracy being below 10 m). Therefore, how to improve the positioning accuracy of the tag terminal is a problem to be urgently resolved currently. Further, a target tag terminal sends a positioning reference signal at a fixed frequency. Therefore, the network device can position only one tag terminal at a same time, resulting in low positioning efficiency.

This application provides corresponding technical solutions, to cause a first apparatus to receive at least two pieces of first frequency information from a network device, and send at least two positioning reference signals based on the at least two pieces of first frequency information. This helps increase a transmission bandwidth used by the first apparatus for sending the positioning reference signal, thereby improving positioning accuracy. For details, refer to related descriptions in the following embodiments.

In this application, frequency conversion may also be referred to as frequency spreading, and the frequency conversion and the frequency spreading may be used interchangeably. This is not specifically limited in this application. A frequency conversion sequence may also be referred to as a frequency spreading sequence, and the frequency conversion sequence and the frequency spreading sequence may be used interchangeably. This is not specifically limited in this application. A frequency conversion multiple may also be referred to as a frequency spreading multiple, and the frequency conversion multiple and the frequency spreading multiple may be used interchangeably. This is not specifically limited in this application.

The following describes the technical solutions of this application with reference to specific embodiments.

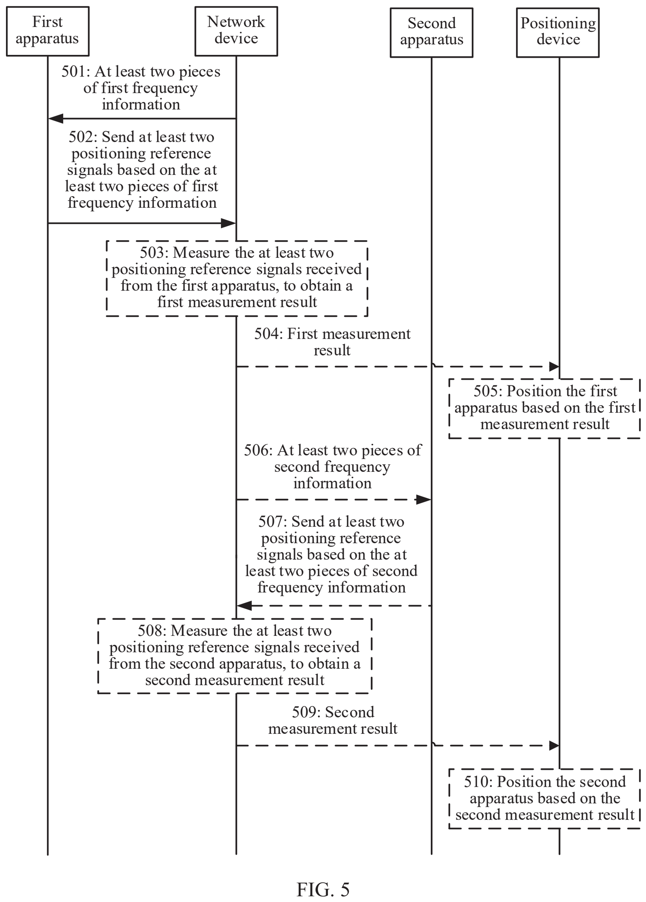

FIG. 5 is a diagram of an embodiment of a positioning method according to an embodiment of this application. Refer to FIG. 5. The method includes the following steps.

501: A network device sends at least two pieces of first frequency information to a first apparatus. Correspondingly, the first apparatus receives the at least two pieces of first frequency information from the network device.

The at least two pieces of first frequency information include first frequency information 1 and first frequency information 2. The first frequency information 1 is used by the first apparatus for sending a first positioning reference signal. The first frequency information 2 is used by the first apparatus for sending a second positioning reference signal.

The at least two pieces of first frequency information include two or more pieces of first frequency information. Herein, the first frequency information 1 and the first frequency information 2 are used as an example for description, and other first frequency information is used similarly.

Optionally, the first frequency information 1 indicates a frequency conversion sequence or a frequency offset value used by the first apparatus for sending the first positioning reference signal.

The frequency conversion sequence used by the first apparatus for sending the first positioning reference signal is used by the first apparatus for generating the first positioning reference signal. For example, a positioning reference signal sequence is 10, and the frequency conversion sequence is 1010. In this case, the first apparatus generates the first positioning reference signal based on the positioning reference signal sequence and the frequency conversion sequence. Specifically, the first apparatus may multiply the positioning reference signal sequence by the frequency conversion sequence to obtain a sequence used for generating the first positioning reference signal, where the sequence used for generating the first positioning reference signal is 10100101. The first apparatus then generates the first positioning reference signal based on the sequence used for generating the first positioning reference signal.

For example, a transmission bandwidth used by the first apparatus for sending a positioning reference signal is 180 kHz (kilohertz), and the frequency offset value indicated by the first frequency information 1 is 30 kHz. Therefore, a transmission bandwidth used by the first apparatus for sending the first positioning reference signal is 180 kHz + 30 kHz. It can be learned that a sending frequency of the first positioning reference signal is 1/(180 kHz + 30 kHz).

Optionally, the first frequency information 2 indicates a frequency conversion sequence or a frequency offset value used by the first apparatus for sending the second positioning reference signal. The first frequency information 2 is similar to the first frequency information 1. For details, refer to the foregoing related descriptions.

Optionally, the frequency conversion sequence used by the first apparatus for sending the first positioning reference signal is the same as or different from the frequency conversion sequence used by the first apparatus for sending the second positioning reference signal. Alternatively, the frequency offset value used by the first apparatus for sending the first positioning reference signal is the same as or different from the frequency offset value used by the first apparatus for sending the second positioning reference signal.

If the frequency conversion sequence used by the first apparatus for sending the first positioning reference signal is different from the frequency conversion sequence used by the first apparatus for sending the second positioning reference signal, or the frequency offset value used by the first apparatus for sending the first positioning reference signal is different from the frequency offset value used by the first apparatus for sending the second positioning reference signal, a frequency at which the first apparatus sends the first positioning reference signal is different from a frequency at which the first apparatus sends the second positioning reference signal.

Optionally, the first positioning reference signal and the second positioning reference signal are two different positioning reference signals. To be specific, the first positioning reference signal and the second positioning reference signal are two positioning reference signals carried on different positioning reference signal resources; the first positioning reference signal and the second positioning reference signal are two positioning reference signals carried on a same positioning reference signal resource; the first positioning reference signal and the second positioning reference signal are two positioning reference signals with different identifiers; or the first positioning reference signal and the second positioning reference signal are two positioning reference signals corresponding to different sequences. This is not specifically limited in this application.

In a possible implementation, the first positioning reference signal is a positioning reference signal sequence, and the second positioning reference signal is the positioning reference signal sequence.

In another possible implementation, the first positioning reference signal is a first subsequence, and the second positioning reference signal is a second subsequence. The first subsequence and the second subsequence are a plurality of subsequences obtained by segmenting the positioning reference signal sequence. For example, the positioning reference signal sequence is 1010, the first subsequence may be 10, and the second subsequence may be 10. That is, the positioning reference signal sequence is divided into the first subsequence and the second subsequence.

For the first apparatus and the network device, refer to the foregoing related descriptions. Details are not described herein again.

The following describes some possible implementations of the at least two pieces of first frequency information. This application is also applicable to another implementation. This is not specifically limited in this application.

Implementation 1: The at least two pieces of first frequency information include a first sequence. The first sequence indicates a quantity of times of sending the positioning reference signal by the first apparatus and frequency information used for each time of sending the positioning reference signal.

Optionally, a length of the first sequence indicates the quantity of times of sending the positioning reference signal by the first apparatus. For example, the first sequence includes one or more numerical values, and a quantity of numerical values included in the first sequence is the quantity of times of sending the positioning reference signal by the first apparatus. That is, the quantity of numerical values included in the first sequence is the quantity of sending times. For example, the first sequence is 0 2 3. It can be learned that the first sequence includes three numerical values, and the length of the first sequence is 3. Therefore, the first sequence indicates that the first apparatus is to send the positioning reference signal for three times. For example, the first sequence is 0 kHz, 30 kHz, 60 kHz. It can be learned that the first sequence includes three numerical values, that is, the length of the first sequence is 3. Therefore, the first sequence indicates that the first apparatus is to send the positioning reference signal for three times.

Optionally, each of the one or more numerical values corresponds to one time of sending the positioning reference signal, and each of the one or more numerical values indicates frequency information used by the first apparatus for one time of sending the positioning reference signal corresponding to the numerical value. For example, the first sequence is 0 2 3. The first sequence includes three numerical values, that is, the length of the first sequence is 3. Therefore, the first sequence indicates that the first apparatus is to send the positioning reference signal for three times. The numerical value 0 in the first sequence indicates frequency information used by the first apparatus for a 1^{st} time of sending the positioning reference signal. The numerical value 2 in the first sequence indicates frequency information used by the first apparatus for a 2^{nd} time of sending the positioning reference signal. The numerical value 3 in the first sequence indicates frequency information used by the first apparatus for a 3^{rd} time of sending the positioning reference signal.

The following describes two possible implementations of a meaning indicated by each numerical value in the first sequence. This application is also applicable to another implementation. This is not specifically limited in this application.

Manner 1: In the first sequence, each of the one or more numerical values indicates an index of a frequency conversion sequence used by the first apparatus for one time of sending the positioning reference signal corresponding to the numerical value.

For example, the first sequence is 0 2 3. The first sequence indicates that the first apparatus is to send the positioning reference signal for three times. The numerical value 0 in the first sequence is an index of a frequency conversion sequence used by the first apparatus for a 1^{st} time of sending the positioning reference signal. The numerical value 2 in the first sequence is an index of a frequency conversion sequence used by the first apparatus for a 2^{nd} time of sending the positioning reference signal. The numerical value 3 in the first sequence is an index of a frequency conversion sequence used by the first apparatus for a 3^{rd} time of sending the positioning reference signal.

It should be noted that, optionally, the index of the frequency conversion sequence may also be referred to as a frequency conversion multiple. The frequency conversion multiple is a multiple by which the first apparatus performs frequency conversion or frequency spreading on the positioning reference signal sequence when sending the positioning reference signal. For example, the first sequence is 0 2 3. The numerical value 0 in the first sequence indicates that the first apparatus is not to perform frequency conversion on the positioning reference signal sequence when sending the positioning reference signal for the 1st time. The numerical value 2 in the first sequence indicates that the first apparatus is to perform quadruple frequency conversion on the positioning reference signal sequence when sending the positioning reference signal for the 2nd time. After the frequency conversion, a frequency of the positioning reference signal sequence becomes quadruple that of the original positioning reference signal sequence on which frequency conversion is not performed. The numerical value 3 in the first sequence indicates that the first apparatus is to perform octuple frequency conversion on the positioning reference signal sequence when sending the positioning reference signal for the 3rd time. After the frequency conversion, a frequency of the positioning reference signal sequence becomes octuple that of the original positioning reference signal sequence on which frequency conversion is not performed.

Manner 2: In the first sequence, each of the one or more numerical values indicates a frequency offset value used by the first apparatus for one time of sending the positioning reference signal corresponding to the numerical value.

In a possible implementation, each of the one or more numerical values is a frequency offset value used by the first apparatus for one time of sending the positioning reference signal corresponding to the numerical value. For example, the first sequence is 0 kHz, 30 kHz, 60 kHz. The first sequence indicates that the first apparatus is to send the positioning reference signal for three times. The numerical value 0 kHz in the first sequence is a frequency offset value used by the first apparatus for a 1^{st} time of sending the positioning reference signal. The numerical value 30 kHz in the first sequence is a frequency offset value used by the first apparatus for a 2^{nd} time of sending the positioning reference signal. The numerical value 60 kHz in the first sequence is a frequency offset value used by the first apparatus for a 3^{rd} time of sending the positioning reference signal.

In another possible implementation, each of the one or more numerical values indicates a frequency offset value used by the first apparatus for one time of sending the positioning reference signal corresponding to the numerical value. For example, the first sequence is 0 1 2. The first sequence indicates that the first apparatus is to send the positioning reference signal for three times. The numerical value 0 in the first sequence indicates a frequency offset value of 0 kHz used by the first apparatus for a 1^{st} time of sending the positioning reference signal. The numerical value 1 in the first sequence indicates a frequency offset value of 30 kHz used by the first apparatus for a 2^{nd} time of sending the positioning reference signal. The numerical value 2 in the first sequence indicates a frequency offset value of 60 kHz used by the first apparatus for a 3^{rd} time of sending the positioning reference signal.

Optionally, the frequency offset value may also be referred to as a frequency conversion value or a frequency spreading value. This is not specifically limited in this application.

Implementation 2: The at least two pieces of first frequency information include a second sequence. The second sequence indicates a quantity of segments obtained by segmenting the positioning reference signal sequence by the first apparatus and frequency information used by the first apparatus for sending each subsequence obtained through segmenting.

Optionally, a length of the second sequence indicates the quantity of segments obtained by segmenting the positioning reference signal sequence by the first apparatus. For example, the second sequence includes one or more numerical values, and a quantity of numerical values included in the second sequence is the quantity of segments obtained by segmenting the positioning reference signal sequence by the first apparatus. For example, the second sequence is 0 2 3. It can be learned that the second sequence includes three numerical values, and the length of the second sequence is 3. Therefore, the second sequence indicates that the first apparatus segments the positioning reference signal sequence into three subsequences. When the positioning reference signal sequence is 101010, the first apparatus may segment the positioning reference signal sequence into three subsequences. The three subsequences include a subsequence 1, a subsequence 2, and a subsequence 3. The subsequence 1 is 10, the subsequence 2 is 10, and the subsequence 3 is 10. For another example, the second sequence is 0 kHz, 30 kHz. It can be learned that the second sequence includes two numerical values, and the length of the second sequence is 2. Therefore, the second sequence indicates that the first apparatus is to segment the positioning reference signal sequence into two subsequences. When the positioning reference signal sequence is 0101, the first apparatus may segment the positioning reference signal sequence into two subsequences: a subsequence 1 and a subsequence 2. The subsequence 1 is 01, and the subsequence 2 is 01.

Optionally, the second sequence includes one or more numerical values, each of the one or more numerical values corresponds to one subsequence, and different numerical values correspond to different subsequences. The subsequences are obtained by segmenting the positioning reference signal sequence by the first apparatus. For example, the second sequence is 0 2 3, and the positioning reference signal sequence is 101010. The first apparatus may segment the positioning reference signal sequence into three subsequences, and the three subsequences include a subsequence 1, a subsequence 2, and a subsequence 3. The subsequence 1 is 10, the subsequence 2 is 10, and the subsequence 3 is 10. The numerical value 0 in the second sequence corresponds to the subsequence 1, the numerical value 2 in the second sequence corresponds to the subsequence 2, and the numerical value 3 in the second sequence corresponds to the subsequence 3.

The following describes two possible implementations of a meaning indicated by each of the one or more numerical values in the second sequence. This application is also applicable to another implementation. This is not specifically limited in this application.

Manner 1: In the second sequence, each of the one or more numerical values indicates an index of a frequency conversion sequence used by the first apparatus for sending the subsequence corresponding to the numerical value.

For example, the second sequence is 0 2 3, and the positioning reference signal sequence is 101010. The first apparatus may segment the positioning reference signal sequence into three subsequences: a subsequence 1, a subsequence 2, and a subsequence 3. The subsequence 1 is 10, the subsequence 2 is 10, and the subsequence 3 is 10. The numerical value 0 in the second sequence corresponds to the subsequence 1, the numerical value 2 in the second sequence corresponds to the subsequence 2, and the numerical value 3 in the second sequence corresponds to the subsequence 3. The numerical value 0 in the second sequence is an index of a frequency conversion sequence used by the first apparatus for sending the subsequence 1 corresponding to the numerical value 0. The numerical value 2 in the second sequence is an index of a frequency conversion sequence used by the first apparatus for sending the subsequence 2 corresponding to the numerical value 2. The numerical value 3 in the second sequence is an index of a frequency conversion sequence used by the first apparatus for sending the subsequence 3 corresponding to the numerical value 3.

It should be noted that, optionally, the index of the frequency conversion sequence may also be referred to as a frequency conversion multiple. The frequency conversion multiple is a multiple by which the first apparatus performs frequency conversion on a subsequence corresponding to a numerical value when sending the subsequence corresponding to the numerical value. For example, the second sequence is 0 2 3, and the positioning reference signal sequence is 101010. The first apparatus may segment the positioning reference signal sequence into three subsequences: a subsequence 1, a subsequence 2, and a subsequence 3. The subsequence 1 is 10, the subsequence 2 is 10, and the subsequence 3 is 10. The numerical value 0 in the second sequence indicates that the first apparatus is not to perform frequency conversion on the subsequence 1 when sending the subsequence 1. The numerical value 2 in the second sequence indicates that the first apparatus is to perform quadruple frequency conversion on the subsequence 2 when sending the subsequence 2. After the frequency conversion, a frequency of the subsequence 2 is quadruple that of the original subsequence 2 on which frequency conversion is not performed. The numerical value 3 in the second sequence indicates that the first apparatus is to perform octuple frequency conversion on the subsequence 3 when sending the subsequence 3. After the frequency conversion, a frequency of the subsequence 3 is octuple that of the original subsequence 3 on which frequency conversion is not performed.

Manner 2: In the second sequence, each of the one or more numerical values indicates a frequency offset value used by the first apparatus for sending the subsequence corresponding to the numerical value.

For example, the second sequence is 0 kHz, 30 kHz, 60 kHz, and the positioning reference signal sequence is 101010. The first apparatus may segment the positioning reference signal sequence into three subsequences: a subsequence 1, a subsequence 2, and a subsequence 3. The subsequence 1 is 10, the subsequence 2 is 10, and the subsequence 3 is 10. The numerical value 0 kHz in the second sequence corresponds to the subsequence 1, the numerical value 30 kHz in the second sequence corresponds to the subsequence 2, and the numerical value 60 kHz in the second sequence corresponds to the subsequence 3. In other words, a frequency offset value used by the first apparatus for sending the subsequence 1 is 0 kHz, a frequency offset value used by the first apparatus for sending the subsequence 2 is 30 kHz, and a frequency offset value used by the first apparatus for sending the subsequence 3 is 60 kHz.

Optionally, the frequency offset value may also be referred to as a frequency conversion value or a frequency spreading value. This is not specifically limited in this application.

In this application, optionally, the frequency offset value is an integer multiple of a subcarrier spacing in an orthogonal frequency division multiplexing (orthogonal frequency division multiplexing, OFDM) system. For example, the subcarrier spacing may be 15 kHz, 30 kHz, 60 kHz, 120 kHz, 240 kHz, or the like.

It should be noted that, optionally, the at least two pieces of first frequency information may be preconfigured or preset in the first apparatus. Step 501 is merely an example. This is not specifically limited in this application.

502: The first apparatus sends at least two positioning reference signals based on the at least two pieces of first frequency information.

The at least two positioning reference signals include the first positioning reference signal and the second positioning reference signal.

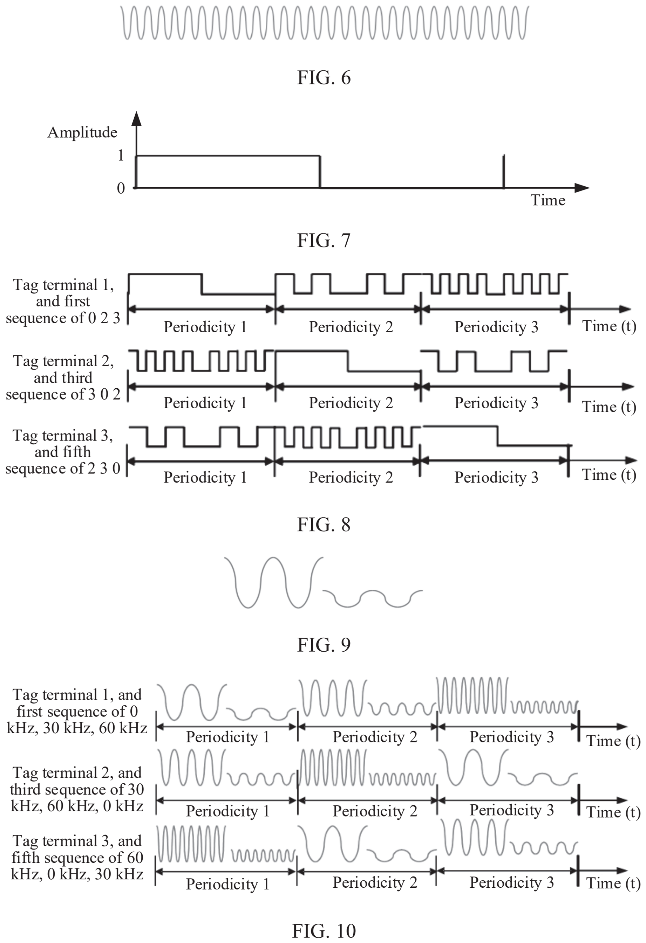

In a possible implementation, the first apparatus cannot actively send a signal. Therefore, the first apparatus receives a first carrier signal from the network device. The first carrier signal is a single-frequency carrier signal, or may be a multi-frequency composite signal. For example, a waveform of the first carrier signal sent by the network device to the first apparatus is shown in FIG. 6. When the first apparatus is excited by the first carrier signal, the first apparatus reflects a second carrier signal. The first apparatus may modulate a generated positioning reference signal onto the second carrier signal. For example, the first apparatus is a passive tag or a semi-passive tag.

In another possible implementation, the first apparatus may actively generate a carrier signal. The first apparatus modulates a generated positioning reference signal onto the carrier signal, and sends the positioning reference signal to the network device. For example, the first apparatus is an active tag.

The following describes step 502 with reference to specific implementations of the at least two pieces of first frequency information.

Implementation 1: The at least two pieces of first frequency information include a first sequence. The following describes step 502 with reference to two possible manners for the first sequence.

Manner 1: The first sequence includes one or more numerical values, and each of the one or more numerical values indicates an index of a frequency conversion sequence used by the first apparatus for one time of sending the positioning reference signal corresponding to the numerical value.

For example, a positioning reference signal sequence is 10, and the first apparatus uses an on-off keying (On-Off keying, OOK) modulation scheme, where 1 represents a high level, and 0 represents a low level. A waveform of the positioning reference signal sequence may be shown in FIG. 7. It should be noted that an example in which the first apparatus uses the on-off keying modulation scheme is used herein. During actual application, the first apparatus may perform modulation by using another modulation scheme. This is not specifically limited in this application. For example, in the positioning reference signal sequence, 1 represents a specific sequence. This is not specifically limited in this application. The following mainly uses an example in which the first apparatus uses the on-off keying modulation scheme for description. The first sequence is 0 2 3. The first sequence indicates that the first apparatus is to send the positioning reference signal for three times. The numerical value 0 in the first sequence is an index of a frequency conversion sequence used by the first apparatus for a 1^{st} time of sending the positioning reference signal. The frequency conversion sequence is referred to as a frequency conversion sequence 1 herein. The numerical value 2 in the first sequence is an index of a frequency conversion sequence used by the first apparatus for a 2^{nd} time of sending the positioning reference signal. The frequency conversion sequence is referred to as a frequency conversion sequence 2 herein. The numerical value 3 in the first sequence is an index of a frequency conversion sequence used by the first apparatus for a 3^{rd} time of sending the positioning reference signal. The frequency conversion sequence is referred to as a frequency conversion sequence 3 herein. As shown in FIG. 8, the first apparatus is a tag terminal 1. The frequency conversion sequence 1 is 1. The tag terminal 1 multiplies the positioning reference signal sequence by the frequency conversion sequence 1, to obtain a sequence sent by the tag terminal 1 in a periodicity 1 as shown in FIG. 8. The sequence sent by the tag terminal in the periodicity 1 is 10. The frequency conversion sequence 2 is 1010. The tag terminal 1 multiplies the positioning reference signal sequence by the frequency conversion sequence 2, to obtain a sequence sent by the tag terminal 1 in a periodicity 2 as shown in FIG. 8. The sequence sent by the tag terminal 1 in the periodicity 2 is 10100101. The frequency conversion sequence 3 is 10101101. The tag terminal 1 multiplies the positioning reference signal sequence by the frequency conversion sequence 3, to obtain a sequence sent by the tag terminal 1 in a periodicity 3 as shown in FIG. 8. The sequence sent by the tag terminal 1 in the periodicity 3 is 1010101001010101. The periodicity 1, the periodicity 2, and the periodicity 3 correspond to same duration. The tag terminal 1 may modulate the sequence sent in the periodicity 1 onto a carrier signal, and send the sequence to the network device. The tag terminal 1 may modulate the sequence sent in the periodicity 2 onto a carrier signal, and send the sequence to the network device. The tag terminal 1 may modulate the sequence sent in the periodicity 3 onto a carrier signal, and send the sequence to the network device. It should be noted that, in the example shown in FIG. 8, the first apparatus performs an XNOR operation on the positioning reference signal sequence and the frequency conversion sequence, to obtain a sequence sent by the first apparatus in a corresponding periodicity. During actual application, the first apparatus may alternatively perform an XOR operation on the positioning reference signal sequence and the frequency conversion sequence, to obtain a sequence sent by the first apparatus in a corresponding periodicity. This is not specifically limited in this application. The following mainly describes the technical solutions of this application by using an example in which the first apparatus performs the XNOR operation on the positioning reference signal sequence and the frequency conversion sequence, to obtain the sequence sent by the first apparatus in the corresponding periodicity.

In this implementation, the first apparatus may perform frequency conversion on a frequency of the positioning reference signal sequence at a baseband, and then modulate the positioning reference signal sequence obtained through frequency conversion onto the carrier signal.

Manner 2: The first sequence includes one or more numerical values, and each of the one or more numerical values indicates a frequency offset value used by the first apparatus for one time of sending the positioning reference signal corresponding to the numerical value.

For example, a positioning reference signal sequence is 10, and the first apparatus uses an on-off keying modulation scheme, where 1 represents a high level, and 0 represents a low level. A waveform of the positioning reference signal sequence may be shown in FIG. 9. The first sequence is 0 kHz, 30 kHz, 60 kHz. The first sequence indicates that the first apparatus is to send the positioning reference signal for three times. The numerical value 0 kHz in the first sequence is a frequency offset value used by the first apparatus for a 1^{st} time of sending the positioning reference signal. The frequency offset value is referred to as a frequency offset value 1 herein. The numerical value 30 kHz in the first sequence is a frequency offset value used by the first apparatus for a 2^{nd} time of sending the positioning reference signal. The frequency offset value is referred to as a frequency offset value 2 herein. The numerical value 60 kHz in the first sequence is a frequency offset value used by the first apparatus for a 3^{rd} time of sending the positioning reference signal. The frequency offset value is referred to as a frequency offset value 3 herein. As shown in FIG. 10, the first apparatus is a tag terminal 1. The tag terminal 1 adjusts a frequency of the positioning reference signal sequence based on the frequency offset value 1, to obtain a sequence sent by the tag terminal 1 in a periodicity 1 as shown in FIG. 10. The tag terminal 1 adjusts a frequency of the positioning reference signal sequence based on the frequency offset value 2, to obtain a sequence sent by the tag terminal 1 in a periodicity 2 as shown in FIG. 10. The tag terminal 1 adjusts a frequency of the positioning reference signal sequence based on the frequency offset value 3, to obtain a sequence sent by the tag terminal 1 in a periodicity 3 as shown in FIG. 10. The periodicity 1, the periodicity 2, and the periodicity 3 correspond to same duration. In this implementation, the first apparatus adjusts the frequency of the positioning reference signal sequence based on the frequency offset value, to implement frequency conversion on the positioning reference signal sequence. Optionally, the first apparatus adjusts the frequency of the positioning reference signal sequence by using a corresponding circuit or module. The positioning reference signal sequence may be understood as a carrier signal obtained through modulation, or an analog signal. In other words, the first apparatus adjusts a frequency of the carrier signal or a frequency of the analog signal, instead of adjusting the frequency of the positioning reference signal sequence at a baseband.

Implementation 2: The at least two pieces of first frequency information include a second sequence. The following describes step 502 with reference to two possible manners for the second sequence.

Manner 1: The second sequence includes one or more numerical values, and each of the one or more numerical values indicates an index of a frequency conversion sequence used by the first apparatus for sending the subsequence corresponding to the numerical value.

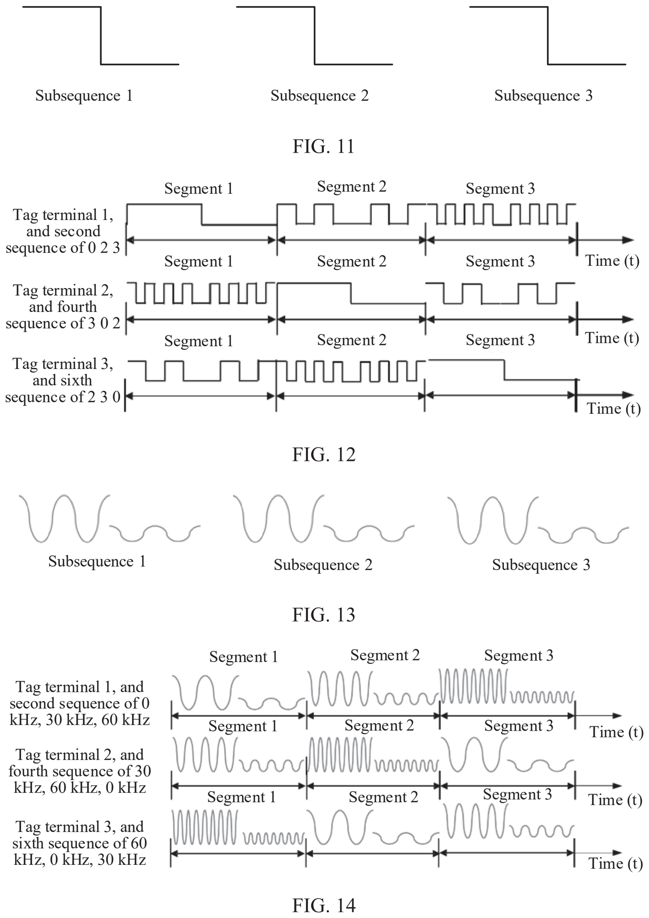

For example, a positioning reference signal sequence is 101010, and the first apparatus uses an on-off-keying modulation scheme, where 1 represents a high level, and 0 represents a low level. The second sequence is 0 2 3. The first apparatus segments the positioning reference signal sequence into three subsequences, and the three subsequences are respectively a subsequence 1, a subsequence 2, and a subsequence 3. Specific waveforms are shown in FIG. 11. The numerical value 0 in the second sequence corresponds to the subsequence 1. To be specific, the numerical value 0 in the second sequence is an index of a frequency conversion sequence used by the first apparatus for sending the subsequence 1. The frequency conversion sequence is referred to as a frequency conversion sequence 1 herein. The numerical value 2 in the second sequence corresponds to the subsequence 2. To be specific, the numerical value 2 in the second sequence is an index of a frequency conversion sequence used by the first apparatus for sending the subsequence 2. The frequency conversion sequence is referred to as a frequency conversion sequence 2 herein. The numerical value 3 in the second sequence corresponds to the subsequence 3. To be specific, the numerical value 3 in the second sequence is an index of a frequency conversion sequence used by the first apparatus for sending the subsequence 3. The frequency conversion sequence is referred to as a frequency conversion sequence 3 herein. As shown in FIG. 12, the frequency conversion sequence 1 is 10. A tag terminal 1 multiplies the subsequence 1 by the frequency conversion sequence 1, to obtain a sequence shown by a segment 1 sent by the tag terminal 1 as shown in FIG. 12. The sequence shown by the segment 1 sent by the tag terminal 1 is 10. The frequency conversion sequence 2 is 1010. The tag terminal 1 multiplies the subsequence 2 by the frequency conversion sequence 2, to obtain a sequence shown by a segment 2 sent by the tag terminal 1 as shown in FIG. 12. The sequence shown by the segment 2 sent by the tag terminal 1 is 10100101. The frequency conversion sequence 3 is 10101101. The tag terminal 1 multiplies the subsequence 3 by the frequency conversion sequence 3, to obtain a sequence shown by a segment 3 sent by the tag terminal 1 as shown in FIG. 12. Duration of the sequence shown by the segment 1 sent by the tag terminal 1, duration of the sequence shown by the segment 2 sent by the tag terminal 1, and duration of the sequence shown by the segment 3 sent by the tag terminal 1 are the same. The sequence shown by the segment 3 sent by the tag terminal 1 is 1010101001010101. The sequence shown by the segment 1 sent by the tag terminal 1 is modulated onto a carrier signal, and the sequence is sent to the network device. The sequence shown by the segment 2 sent by the tag terminal 1 is modulated onto a carrier signal, and the sequence is sent to the network device. The sequence shown by the segment 3 sent by the tag terminal 1 is modulated onto a carrier signal, and the sequence is sent to the network device.

In this implementation, the first apparatus may perform frequency conversion or frequency spreading on a frequency of the subsequence at a baseband, and then modulate the subsequence obtained through frequency conversion or frequency spreading onto the carrier signal.

Manner 2: The second sequence includes one or more numerical values, and each of the one or more numerical values indicates a frequency offset value used by the first apparatus for sending the subsequence corresponding to the numerical value.

For example, a positioning reference signal sequence is 101010, and the first apparatus uses an on-off-keying modulation scheme, where 1 represents a high level, and 0 represents a low level. The second sequence is 0 kHz, 30 kHz, 60 kHz. The first apparatus segments the positioning reference signal sequence into three subsequences, and the three subsequences are respectively a subsequence 1, a subsequence 2, and a subsequence 3. Specific waveforms are shown in FIG. 13. The numerical value 0 kHz in the second sequence is a frequency offset value used by the first apparatus for sending the subsequence 1. The frequency offset value is referred to as a frequency offset value 1 herein. The numerical value 30 kHz in the second sequence is a frequency offset value used by the first apparatus for sending the subsequence 2. The frequency offset value is referred to as a frequency offset value 2 herein. The numerical value 60 kHz in the second sequence is a frequency offset value used by the first apparatus for sending the subsequence 3. The frequency offset value is referred to as a frequency offset value 3 herein. As shown in FIG. 14, a tag terminal 1 modulates a frequency of the subsequence 1 based on the frequency offset value 1, to obtain a sequence shown by a segment 1 sent by the tag terminal 1 as shown in FIG. 14. The tag terminal 1 modulates a frequency of the subsequence 2 based on the frequency offset value 2, to obtain a sequence shown by a segment 2 sent by the tag terminal 1 as shown in FIG. 14. The tag terminal 1 modulates a frequency of the subsequence 3 based on the frequency offset value 3, to obtain a sequence shown by a segment 3 sent by the tag terminal 1 as shown in FIG. 14. Duration of the sequence shown by the segment 1 sent by the tag terminal 1, duration of the sequence shown by the segment 2 sent by the tag terminal 1, and duration of the sequence shown by the segment 3 sent by the tag terminal 1 are the same. In this implementation, the first apparatus adjusts the frequency of the subsequence based on the frequency offset value, to implement frequency conversion on the frequency of the subsequence. Optionally, the first apparatus adjusts the frequency of the subsequence by using a corresponding circuit or module. Each subsequence may be understood as a carrier signal obtained through modulation. In other words, the first apparatus adjusts a frequency of the carrier signal, instead of adjusting the frequency of the subsequence at a baseband.

Optionally, if the tag terminal 1 needs to send the positioning reference signal for more times, the tag terminal 1 may send the positioning reference signal in the following two manners. Manner 1: The tag terminal 1 may cyclically send the sequences sent by the tag terminal 1 in the periodicity 1 to the periodicity 3 respectively as shown in FIG. 8 or FIG. 10. Manner 2: The tag terminal 1 sends, for a plurality of times, the sequence sent by the tag terminal 1 in the periodicity 1 as shown in FIG. 8 or FIG. 10, then sends, for a plurality of times, the sequence sent by the tag terminal 1 in the periodicity 2 as shown in FIG. 8 or FIG. 10, and finally sends, for a plurality of times, the sequence sent by the tag terminal 1 in the periodicity 3 as shown in FIG. 8 or FIG. 10.

Optionally, if the tag terminal 1 needs to send the positioning reference signal for more times, the tag terminal 1 may send the positioning reference signal in the following two manners. Manner 1: The tag terminal 1 may cyclically send the sequences respectively shown by the segment 1 to the segment 3 sent by the tag terminal 1 as shown in FIG. 10 or FIG. 12. Manner 2: The tag terminal 1 sends, for a plurality of times, the sequence shown by the segment 1 sent by the tag terminal 1 as shown in FIG. 10 or FIG. 12, then sends, for a plurality of times, the sequence shown by the segment 2 sent by the tag terminal 1 as shown in FIG. 10 or FIG. 12, and finally sends, for a plurality of times, the sequence shown by the segment 3 sent by the tag terminal 1 as shown in FIG. 10 or FIG. 12.

Optionally, the embodiment shown in FIG. 5 further includes step 503. Step 503 may be performed after step 502.

503: The network device measures the at least two positioning reference signals received from the first apparatus, to obtain a first measurement result.

Optionally, the first measurement result includes at least one of the following: relative time of arrival (relative time of arrival, RTOA), a reference signal time difference of arrival (reference signal time difference, RSTD), time of arrival (time of arrival, TOA), an angle of arrival (angle of arrival, AoA), or reference signal received power (reference signal received power, RSRP) obtained by the network device by measuring the at least two positioning reference signals.

The network device receives the at least two positioning reference signals from the first apparatus. Each of the at least two positioning reference signals is sent by the first apparatus based on first frequency information corresponding to the positioning reference signal. Frequencies of different positioning reference signals in the at least two positioning reference signals may be the same or different. The network device measures the at least two positioning reference signals to obtain the first measurement result.

Optionally, the embodiment shown in FIG. 5 further includes step 504 and step 505. Step 504 and step 505 may be performed after step 503.

504: The network device sends the first measurement result to a positioning device. Correspondingly, the positioning device receives the first measurement result from the network device.

505: The positioning device positions the first apparatus based on the first measurement result.

It can be learned that the first apparatus sends the positioning reference signal for a plurality of times. This helps increase a coverage area of the positioning reference signal sent by the first apparatus. A frequency at which the first apparatus sends the positioning reference signal may vary each time. This helps increase a transmission bandwidth for the positioning reference signal. The network device measures the at least two positioning reference signals sent by the first apparatus, to obtain the first measurement result. The positioning device positions the first apparatus based on the first measurement result. This helps improve positioning accuracy for the first apparatus.

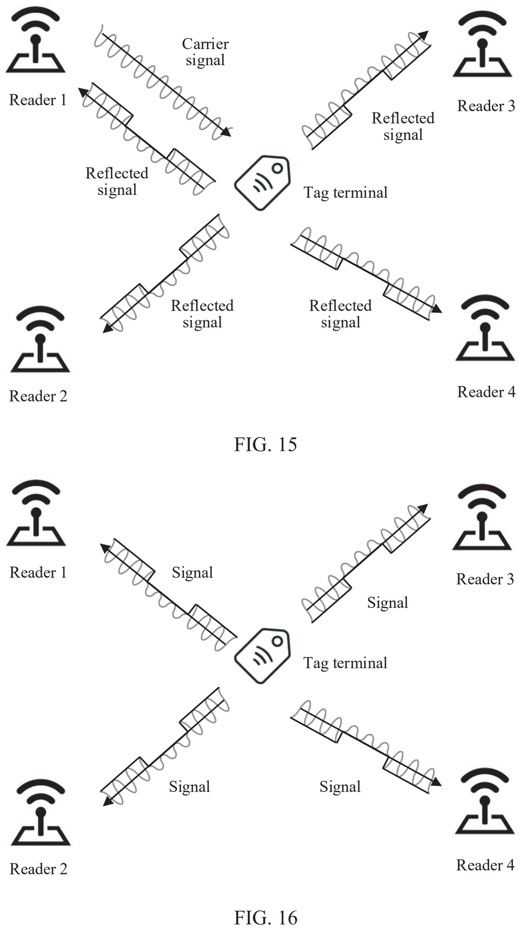

Optionally, a plurality of network devices may receive the at least two positioning reference signals sent by the first apparatus. Each of the plurality of network devices measures the at least two positioning reference signals to obtain a corresponding measurement result, and reports the measurement result to the positioning device. The positioning device may position the first apparatus based on the measurement result reported by each network device. Therefore, the plurality of network devices can position the first apparatus, thereby improving positioning accuracy. For example, as shown in FIG. 15, the first apparatus is a tag terminal, and the plurality of network devices are respectively a reader 1 to a reader 4. The tag terminal receives a carrier signal from the reader 1, and reflects a signal based on the carrier signal. The signal may be a positioning reference signal. Each of the reader 1 to the reader 4 may receive a reflected signal from the first apparatus, and measure the reflected signal to obtain a corresponding measurement result. Each of the reader 1 to the reader 4 may report the measurement result to the positioning device. Therefore, the positioning device positions the tag terminal based on the measurement result reported by each reader. For another example, as shown in FIG. 16, the first apparatus is a tag terminal, and the plurality of network devices are respectively a reader 1 to a reader 4. The tag terminal may actively send a signal. For example, the tag terminal actively sends a positioning reference signal. Each of the reader 1 to the reader 4 measures the positioning reference signal, and obtains a corresponding measurement result. Each of the reader 1 to the reader 4 may report the measurement result to the positioning device. Therefore, the positioning device positions the tag terminal based on the measurement result reported by each reader.

Optionally, the embodiment shown in FIG. 5 further includes step 506 and step 507. Step 506 and step 507 may be performed after step 502.

506: The network device sends at least two pieces of second frequency information to a second apparatus. Correspondingly, the second apparatus receives the at least two pieces of second frequency information from the network device.

The at least two pieces of second frequency information include second frequency information 1 and second frequency information 2. The second frequency information 1 is used by the second apparatus for sending a third positioning reference signal. The second frequency information 2 is used by the second apparatus for sending a fourth positioning reference signal.

The following describes some possible implementations of the at least two pieces of second frequency information. This application is also applicable to another implementation. This is not specifically limited in this application.

Implementation 1: The at least two pieces of second frequency information include a third sequence. The third sequence indicates a quantity of times of sending the positioning reference signal by the second apparatus and frequency information used for each time of sending the positioning reference signal.

In a possible implementation, the third sequence includes one or more numerical values. In the third sequence, each of the one or more numerical values indicates an index of a frequency conversion sequence used by the second apparatus for one time of sending the positioning reference signal corresponding to the numerical value. For example, the third sequence is 3 0 2. The third sequence indicates that the second apparatus is to send the positioning reference signal for three times. The numerical value 3 in the third sequence is an index of a frequency conversion sequence used by the second apparatus for a 1^{st} time of sending the positioning reference signal. The numerical value 0 in the third sequence is an index of a frequency conversion sequence used by the second apparatus for a 2^{nd} time of sending the positioning reference signal. The numerical value 2 in the third sequence is an index of a frequency conversion sequence used by the second apparatus for a 3^{rd} time of sending the positioning reference signal.

In another possible implementation, the third sequence includes one or more numerical values. In the third sequence, each of the one or more numerical values indicates a frequency offset value used by the second apparatus for one time of sending the positioning reference signal corresponding to the numerical value. For example, the third sequence is 30 kHz, 60 kHz, 0 kHz. The numerical value 30 kHz in the third sequence is a frequency offset value used by the second apparatus for a 1^{st} time of sending the positioning reference signal. The numerical value 60 kHz in the third sequence is a frequency offset value used by the second apparatus for a 2^{nd} time of sending the positioning reference signal. The numerical value 0 kHz in the third sequence is a frequency offset value used by the second apparatus for a 3^{rd} time of sending the positioning reference signal.

The third sequence is similar to the first sequence. For more details of the third sequence, refer to the related descriptions of the first sequence.

Optionally, the third sequence is different from the first sequence.

Implementation 2: The at least two pieces of second frequency information include a fourth sequence. The fourth sequence indicates a quantity of segments obtained by segmenting the positioning reference signal sequence by the second apparatus and frequency information used by the second apparatus for sending each subsequence obtained through segmenting.

In a possible implementation, the fourth sequence includes one or more numerical values, and each of the one or more numerical values indicates an index of a frequency conversion sequence used by the second apparatus for sending the subsequence corresponding to the numerical value. For example, the fourth sequence is 3 0 2. It can be learned that the fourth sequence includes three numerical values, and a length of the fourth sequence is 3. Therefore, the fourth sequence indicates that the second apparatus is to segment the positioning reference signal sequence into three subsequences: a subsequence 1, a subsequence 2, and a subsequence 3. The subsequence 1 is 10, the subsequence 2 is 10, and the subsequence 3 is 10. The numerical value 3 in the fourth sequence corresponds to the subsequence 1, the numerical value 0 in the fourth sequence corresponds to the subsequence 2, and the numerical value 2 in the fourth sequence corresponds to the subsequence 3. The numerical value 3 in the fourth sequence is an index of a frequency conversion sequence used by the second apparatus for sending the subsequence 1 corresponding to the numerical value 3. The numerical value 0 in the fourth sequence is an index of a frequency conversion sequence used by the second apparatus for sending the subsequence 2 corresponding to the numerical value 0. The numerical value 2 in the fourth sequence is an index of a frequency conversion sequence used by the second apparatus for sending the subsequence 3 corresponding to the numerical value 2.

In another possible implementation, the fourth sequence includes one or more numerical values, and each of the one or more numerical values indicates a frequency offset value used by the second apparatus for sending the subsequence corresponding to the numerical value. For example, the fourth sequence is 30 kHz, 60 kHz, 0 kHz. It can be learned that the fourth sequence includes three numerical values, and a length of the fourth sequence is 3. Therefore, the fourth sequence indicates that the second apparatus is to segment the positioning reference signal sequence into three subsequences: a subsequence 1, a subsequence 2, and a subsequence 3. The subsequence 1 is 10, the subsequence 2 is 10, and the subsequence 3 is 10. The numerical value 30 kHz in the fourth sequence corresponds to the subsequence 1, the numerical value 60 kHz in the fourth sequence corresponds to the subsequence 2, and the numerical value 0 kHz in the fourth sequence corresponds to the subsequence 3. In other words, a frequency offset value used by the second apparatus for sending the subsequence 1 is 30 kHz, a frequency offset value used for sending the subsequence 2 is 60 kHz, and a frequency offset value used for sending the subsequence 3 is 0 kHz.

Optionally, the fourth sequence is different from the second sequence.

The fourth sequence is similar to the second sequence. For more details of the fourth sequence, refer to the related descriptions of the second sequence. Details are not described herein again.

The at least two pieces of second frequency information are similar to the at least two pieces of first frequency information. For more details of the at least two pieces of second frequency information, refer to the related descriptions of the at least two pieces of first frequency information. Details are not described herein again. The third positioning reference signal and the fourth positioning reference signal are similar to the first positioning reference signal and the second positioning reference signal. For details, refer to the related descriptions of the first positioning reference signal and the second positioning reference signal. Details are not described herein again.

It should be noted that, optionally, the at least two pieces of second frequency information may be preconfigured or preset in the second apparatus. Step 506 is merely an example. This is not specifically limited in this application.

507: The second apparatus sends at least two positioning reference signals based on the at least two pieces of second frequency information.

The at least two positioning reference signals include the third positioning reference signal and the fourth positioning reference signal.

The following describes step 507 with reference to specific implementations of the at least two pieces of second frequency information.

Implementation 1: The at least two pieces of second frequency information include a third sequence. The following describes step 507 by describing two possible manners for the third sequence.

Manner 1: The third sequence includes one or more numerical values, and each of the one or more numerical values indicates an index of a frequency conversion sequence used by the second apparatus for one time of sending the positioning reference signal corresponding to the numerical value.

For example, a positioning reference signal sequence is 10, and the second apparatus uses an on-off keying modulation scheme, where 1 represents a high level, and 0 represents a low level. A waveform of the positioning reference signal sequence may be shown in FIG. 7. The third sequence is 3 0 2. The third sequence indicates that the second apparatus is to send the positioning reference signal for three times. The numerical value 3 in the third sequence is an index of a frequency conversion sequence used by the third apparatus for a 1^{st} time of sending the positioning reference signal. The frequency conversion sequence is referred to as a frequency conversion sequence 4 herein. The numerical value 0 in the third sequence is an index of a frequency conversion sequence used by the second apparatus for a 2^{nd} time of sending the positioning reference signal. The frequency conversion sequence is referred to as a frequency conversion sequence 5 herein. The numerical value 2 in the third sequence is an index of a frequency conversion sequence used by the second apparatus for a 3^{rd} time of sending the positioning reference signal. The frequency conversion sequence is referred to as a frequency conversion sequence 6 herein. As shown in FIG. 8, the second apparatus is a tag terminal 2. The frequency conversion sequence 4 is 10101101. The tag terminal 2 multiplies the positioning reference signal sequence by the frequency conversion sequence 4, to obtain a sequence sent by the tag terminal 2 in a periodicity 1 as shown in FIG. 8. The sequence sent by the tag terminal 2 in the periodicity 1 is 1010101001010101. The frequency conversion sequence 5 is 10. The tag terminal 2 multiplies the positioning reference signal sequence by the frequency conversion sequence 5, to obtain a sequence sent by the tag terminal 2 in a periodicity 2 as shown in FIG. 8. The sequence sent by the tag terminal 2 in the periodicity 2 is 10. The frequency conversion sequence 6 is 1010. The tag terminal 2 multiplies the positioning reference signal sequence by the frequency conversion sequence 6, to obtain a sequence sent by the tag terminal 2 in a periodicity 3 as shown in FIG. 8. The sequence sent by the tag terminal 2 in the periodicity 3 is 10100101. The tag terminal 2 may modulate the sequence sent in the periodicity 1 onto a carrier signal, and send the sequence to the network device. The tag terminal 2 may modulate the sequence sent in the periodicity 2 onto a carrier signal, and send the sequence to the network device. The tag terminal 2 may modulate the sequence sent in the periodicity 3 onto a carrier signal, and send the sequence to the network device. The periodicity 1, the periodicity 2, and the periodicity 3 correspond to same duration.

In this implementation, the second apparatus may perform frequency conversion on a frequency of the positioning reference signal sequence at a baseband, and then modulate the positioning reference signal sequence obtained through frequency conversion onto the carrier signal.

Manner 2: The third sequence includes one or more numerical values, and each of the one or more numerical values indicates a frequency offset value used by the second apparatus for one time of sending the positioning reference signal corresponding to the numerical value.

For example, a positioning reference signal sequence is 10, and the second apparatus uses an on-off keying modulation scheme, where 1 represents a high level, and 0 represents a low level. A waveform of the positioning reference signal sequence may be shown in FIG. 9. The third sequence is 30 kHz, 60 kHz, 0 kHz. The third sequence indicates that the second apparatus is to send the positioning reference signal for three times. The numerical value 30 kHz in the third sequence is a frequency offset value used by the second apparatus for a 1^{st} time of sending the positioning reference signal. The frequency offset value is referred to as a frequency offset value 4 herein. The numerical value 60 kHz in the third sequence is a frequency offset value used by the second apparatus for a 2^{nd} time of sending the positioning reference signal. The frequency offset value is referred to as a frequency offset value 5 herein. The numerical value 0 kHz in the third sequence is a frequency offset value used by the second apparatus for a 3^{rd} time of sending the positioning reference signal. The frequency offset value is referred to as a frequency offset value 6 herein. As shown in FIG. 10, the second apparatus is a tag terminal 2. The tag terminal 2 adjusts a frequency of the positioning reference signal sequence based on the frequency offset value 4, to obtain a sequence sent by the tag terminal 2 in a periodicity 1 as shown in FIG. 10. The tag terminal 2 adjusts a frequency of the positioning reference signal sequence based on the frequency offset value 5, to obtain a sequence sent by the tag terminal 2 in a periodicity 2 as shown in FIG. 10. The tag terminal 2 adjusts a frequency of the positioning reference signal sequence based on the frequency offset value 6, to obtain a sequence sent by the tag terminal 2 in a periodicity 3 as shown in FIG. 10. The periodicity 1, the periodicity 2, and the periodicity 3 correspond to same duration. In this implementation, the second apparatus adjusts the frequency of the positioning reference signal sequence based on the frequency offset value, to implement frequency conversion on the positioning reference signal sequence.

Implementation 2: The at least two pieces of second frequency information include a fourth sequence. The following describes step 507 with reference to two possible manners for the fourth sequence.

Manner 1: The fourth sequence includes one or more numerical values, and each of the one or more numerical values indicates an index of a frequency conversion sequence used by the second apparatus for sending the subsequence corresponding to the numerical value.

For example, a positioning reference signal sequence is 101010, and the second apparatus uses an on-off-keying modulation scheme, where 1 represents a high level, and 0 represents a low level. The fourth sequence is 3 0 2. The first apparatus segments the positioning reference signal sequence into three subsequences, and the three subsequences are respectively a subsequence 1, a subsequence 2, and a subsequence 3. Specific waveforms are shown in FIG. 11. The numerical value 3 in the fourth sequence corresponds to the subsequence 1. To be specific, the numerical value 3 in the fourth sequence is an index of a frequency conversion sequence used by the second apparatus for sending the subsequence 1. The frequency conversion sequence is referred to as a frequency conversion sequence 4 herein. The numerical value 0 in the fourth sequence corresponds to the subsequence 2. To be specific, the numerical value 0 in the fourth sequence is an index of a frequency conversion sequence used by the second apparatus for sending the subsequence 2. The frequency conversion sequence is referred to as a frequency conversion sequence 5 herein. The numerical value 2 in the fourth sequence corresponds to the subsequence 3. To be specific, the numerical value 2 in the fourth sequence is an index of a frequency conversion sequence used by the second apparatus for sending the subsequence 3. The frequency conversion sequence is referred to as a frequency conversion sequence 6 herein. As shown in FIG. 12, the second apparatus is a tag terminal 2. The frequency conversion sequence 4 is 10101101. The tag terminal 2 multiplies the positioning reference signal sequence by the frequency conversion sequence 4, to obtain a sequence sent by the tag terminal 2 in a periodicity 1 as shown in FIG. 12. The sequence sent by the tag terminal 2 in the periodicity 1 is 1010101001010101. The frequency conversion sequence 5 is 10. The tag terminal 2 multiplies the positioning reference signal sequence by the frequency conversion sequence 5, to obtain a sequence sent by the tag terminal 2 in a periodicity 2 as shown in FIG. 12. The sequence sent by the tag terminal 2 in the periodicity 2 is 10. The frequency conversion sequence 6 is 1010. The tag terminal 2 multiplies the positioning reference signal sequence by the frequency conversion sequence 6, to obtain a sequence sent by the tag terminal 2 in a periodicity 3 as shown in FIG. 12. The sequence sent by the tag terminal 2 in the periodicity 3 is 10100101. Duration of the sequence shown by the segment 1 sent by the tag terminal 2, duration of the sequence shown by the segment 2 sent by the tag terminal 2, and duration of the sequence shown by the segment 3 sent by the tag terminal 2 are the same.

Manner 2: The fourth sequence includes one or more numerical values, and each of the one or more numerical values indicates a frequency offset value used by the second apparatus for sending the subsequence corresponding to the numerical value.

For example, a positioning reference signal sequence is 101010, and the second apparatus uses an on-off-keying modulation scheme, where 1 represents a high level, and 0 represents a low level. The fourth sequence is 30 kHz, 60 kHz, 0 kHz. The second apparatus segments the positioning reference signal sequence into three subsequences, and the three subsequences are respectively a subsequence 1, a subsequence 2, and a subsequence 3. Specific waveforms are shown in FIG. 13. The numerical value 30 kHz in the fourth sequence is a frequency offset value used by the second apparatus for sending the subsequence 1. The frequency offset value is referred to as a frequency offset value 4 herein. The numerical value 60 kHz in the fourth sequence is a frequency offset value used by the second apparatus for sending the subsequence 2. The frequency offset value is referred to as a frequency offset value 5 herein. The numerical value 0 kHz in the fourth sequence is a frequency offset value used by the second apparatus for sending the subsequence 3. The frequency offset value is referred to as a frequency offset value 6 herein. As shown in FIG. 14, the second apparatus is a tag terminal 2. The tag terminal 2 adjusts a frequency of the subsequence 1 based on the frequency offset value 4, to obtain a sequence shown by a segment 1 sent by the tag terminal 2 as shown in FIG. 14. The tag terminal 2 adjusts a frequency of the subsequence 2 based on the frequency offset value 5, to obtain a sequence shown by a segment 2 sent by the tag terminal 2 as shown in FIG. 14. The tag terminal 2 adjusts a frequency of the subsequence 3 based on the frequency offset value 6, to obtain a sequence shown by a segment 3 sent by the tag terminal 2 as shown in FIG. 14. Duration of the sequence shown by the segment 1 sent by the tag terminal 2, duration of the sequence shown by the segment 2 sent by the tag terminal 2, and duration of the sequence shown by the segment 3 sent by the tag terminal 2 are the same. In this implementation, the second apparatus adjusts the frequency of the subsequence based on the frequency offset value, to implement frequency conversion on the subsequence. Optionally, the second apparatus adjusts the frequency of the subsequence by using a corresponding circuit or module. Each subsequence may be understood as a carrier signal obtained through modulation. In other words, the second apparatus adjusts a frequency of the carrier signal, instead of adjusting the frequency of the subsequence at a baseband.

Optionally, the first frequency information 1 indicates the frequency conversion sequence used by the first apparatus for sending the first positioning reference signal, and the second frequency information 1 indicates a frequency conversion sequence used by the second apparatus for sending the third positioning reference signal. The frequency conversion sequence used by the first apparatus for sending the first positioning reference signal is different from the frequency conversion sequence used by the second apparatus for sending the third positioning reference signal. For example, as shown in FIG. 8, the first frequency information 1 indicates the frequency conversion sequence 1 used by the tag terminal 1 for sending the positioning reference signal in the periodicity 1, and the frequency conversion sequence 1 is 1. The second frequency information 1 indicates the frequency conversion sequence 4 used by the tag terminal 2 for sending the positioning reference signal in the periodicity 1, and the frequency conversion sequence 4 is 10101101. It can be learned that the frequency conversion sequence 1 is different from the frequency conversion sequence 4.

Optionally, the frequency conversion sequence used by the first apparatus for sending the first positioning reference signal is orthogonal to the frequency conversion sequence used by the second apparatus for sending the third positioning reference signal. For example, the frequency conversion sequence used by the first apparatus for sending the first positioning reference signal is 11011011, and the frequency conversion sequence used by the second apparatus for sending the third positioning reference signal is 00100100. The frequency conversion sequence 11011011 is orthogonal to the frequency conversion sequence 00100100, that is, a product obtained by multiplying the frequency conversion sequence 11011011 by the frequency conversion sequence 00100100 is 0. This helps the network device demodulate the positioning reference signal, to implement compatibility with a current communication system.

Optionally, both the frequency conversion sequence used by the first apparatus for sending the first positioning reference signal and the frequency conversion sequence used by the second apparatus for sending the third positioning reference signal are pseudo-random sequences. The pseudo-random sequences may be obtained through calculation based on a gold (Gold) sequence or an m-sequence. For example, the frequency conversion sequence used by the first apparatus for sending the first positioning reference signal is 10111010, and the frequency conversion sequence used by the second apparatus for sending the third positioning reference signal is 10010100. Low interference is generated between the frequency conversion sequence 10111010 and the frequency conversion sequence 10010100. Therefore, both the first apparatus and the second apparatus may use the pseudo-random sequences as the frequency conversion sequences. This helps the network device demodulate the positioning reference signal, to implement compatibility with a current communication system.

The foregoing provides descriptions by using an example in which frequency conversion sequences used by the tag terminal 1 and the tag terminal 2 for sending the positioning reference signals in the periodicity 1 are orthogonal. During actual application, frequency conversion sequences used by more tag terminals for sending the positioning reference signals simultaneously may be orthogonal. For example, as shown in FIG. 8, the frequency conversion sequence 1 used by the tag terminal 1 for sending the positioning reference signal in the periodicity 1 is 10, the frequency conversion sequence 4 used by the tag terminal 2 for sending the positioning reference signal in the periodicity 1 is 10101101, and a frequency conversion sequence 7 used by a tag terminal 3 for sending the positioning reference signal in the periodicity 1 is 0101. It can be learned that the frequency conversion sequence 1 is different from the frequency conversion sequence 4, and the frequency conversion sequence 4 is different from the frequency conversion sequence 7. It can be learned that, in this application, different frequency conversion sequences are used by a plurality of tag terminals for sending the positioning reference signals simultaneously, so that the network device can parse the positioning reference signals respectively sent by the plurality of tag terminals simultaneously. In this way, the network device may position the plurality of tag terminals simultaneously, to implement multi-user concurrency and increase a system capacity, thereby improving positioning efficiency.

Optionally, the first frequency information 1 indicates the frequency offset value used by the first apparatus for sending the first positioning reference signal, and the second frequency information 1 indicates a frequency offset value used by the second apparatus for sending the third positioning reference signal. The frequency offset value used by the first apparatus for sending the first positioning reference signal is different from the frequency offset value used by the second apparatus for sending the third positioning reference signal. Optionally, both the frequency offset value used by the first apparatus for sending the first positioning reference signal and the frequency offset value used by the second apparatus for sending the third positioning reference signal are integer multiples of a first numerical value. For example, as shown in FIG. 10, the first frequency information 1 indicates that the frequency offset value used by the tag terminal 1 for sending the positioning reference signal in the periodicity 1 is 0 kHz. The second frequency information 1 indicates that the frequency offset value used by the tag terminal 2 for sending the positioning reference signal in the periodicity 1 is 30 kHz. It can be learned that both the frequency offset value used by the tag terminal 1 for sending the positioning reference signal in the periodicity 1 and the frequency offset value used by the tag terminal 2 for sending the positioning reference signal in the periodicity 1 are integer multiples of 15. For another example, the first frequency information 1 indicates that the frequency offset value used by the tag terminal 1 for sending the positioning reference signal in the periodicity 2 is 30 kHz. The second frequency information 1 indicates that the frequency offset value used by the tag terminal 2 for sending the positioning reference signal in the periodicity 2 is 60 kHz. Both the frequency offset value used by the tag terminal 1 for sending the positioning reference signal in the periodicity 2 and the frequency offset value used by the tag terminal 2 for sending the positioning reference signal in the periodicity 2 are integer multiples of 15. Both the frequency offset value used by the first apparatus for sending the first positioning reference signal and the frequency offset value used by the second apparatus for sending the third positioning reference signal are integer multiples of the first numerical value. This helps the network device parse positioning reference signals respectively sent by a plurality of apparatuses simultaneously. In this way, the network device may position the plurality of apparatuses simultaneously, to implement multi-user concurrency and increase a system capacity, thereby improving positioning efficiency. Further, both the frequency offset value used by the first apparatus for sending the first positioning reference signal and the frequency offset value used by the second apparatus for sending the third positioning reference signal are integer multiples of the first numerical value. This helps the network device demodulate the positioning reference signal, to implement compatibility with a current communication system.

The foregoing provides descriptions by using an example in which both the frequency offset values used by the tag terminal 1 and the tag terminal 2 for sending the positioning reference signals in the periodicity 1 and the periodicity 2 respectively are integer multiples of the first numerical value. During actual application, frequency offset values used by more tag terminals for sending the positioning reference signals simultaneously may be different from each other. Optionally, the frequency offset values used by more tag terminals for sending the positioning reference signals simultaneously are all integer multiples of the first numerical value. For example, as shown in FIG. 10, the frequency offset value 1 used by the tag terminal 1 for sending the positioning reference signal in the periodicity 1 is 0 kHz. The frequency offset value 4 used by the tag terminal 2 for sending the positioning reference signal in the periodicity 2 is 30 kHz. The frequency offset value 7 used by the tag terminal 3 for sending the positioning reference signal in the periodicity 3 is 60 kHz. It can be learned that the frequency offset value 1, the frequency offset value 4, and the frequency offset value 7 are all integral multiples of 15. This helps the network device parse the positioning reference signals respectively sent by the plurality of tag terminals simultaneously. In this way, the network device may position the plurality of tag terminals simultaneously, to implement multi-user concurrency and increase a system capacity, thereby improving positioning efficiency.

It should be noted that a sequence of performing step 506 and step 507 and performing step 501 and step 502 is not fixed. Step 506 and step 507 may be performed before step 501 and step 502; or step 501 and step 502 may be performed before step 506 and step 507; or step 501 and step 502 and step 506 and step 507 are simultaneously performed as required. This is not specifically limited in this application.

Optionally, if the embodiment shown in FIG. 5 further includes step 503 to step 505, a sequence of performing step 506 and step 507 and performing step 503 to step 505 is not fixed. Step 506 and step 507 may be performed before step 503 to step 505; or step 503 to step 505 may be performed before step 506 and step 507; or step 506 and step 507, and step 503 to step 505 are simultaneously performed as required. This is not specifically limited in this application.

Optionally, the embodiment shown in FIG. 5 further includes step 508. Step 508 may be performed after step 507.

508: The network device measures the at least two positioning reference signals received from the second apparatus, to obtain a second measurement result.

Step 508 is similar to step 503. For details, refer to the related descriptions of step 503.

Optionally, the embodiment shown in FIG. 5 further includes step 509 and step 510. Step 509 and step 510 may be performed after step 508.

509: The network device sends the second measurement result to the positioning device. Correspondingly, the positioning device receives the second measurement result from the network device.

510: The positioning device positions the second apparatus based on the second measurement result.

Step 509 and step 510 are similar to step 504 and step 505. For details, refer to the related descriptions of step 504 and step 505. Details are not described herein again.

It should be noted that the embodiment shown in FIG. 5 describes the technical solutions of this application by using an example of an interaction process between the network device and the first apparatus and an interaction process between the network device and the second apparatus. During actual application, the network device may further interact with more apparatuses, to position the more apparatuses. Frequency conversion sequences used by the first apparatus, the second apparatus, and the more apparatuses for sending the positioning reference signals are different. Alternatively, frequency offset values used by the first apparatus, the second apparatus, and the more apparatuses for sending the positioning reference signals are different. For example, the frequency conversion sequences used by the first apparatus, the second apparatus, and the more apparatuses for sending the positioning reference signals simultaneously are orthogonal to each other. For example, the frequency offset values used by the first apparatus, the second apparatus, and the more apparatuses for sending the positioning reference signals simultaneously are all integer multiples of a specific numerical value.

According to the foregoing technical solutions, the first apparatus receives the at least two pieces of first frequency information from the network device. The at least two pieces of first frequency information include the first frequency information 1 and the first frequency information 2. The first frequency information 1 is used by the first apparatus for sending the first positioning reference signal. The first frequency information 2 is used by the first apparatus for sending the second positioning reference signal. Then, the first apparatus sends the at least two positioning reference signals based on the at least two pieces of first frequency information, where the at least two positioning reference signals include the first positioning reference signal and the second positioning reference signal. It can be learned that the first apparatus may receive the at least two pieces of first frequency information configured by the network device for the first apparatus. The first apparatus sends the at least two positioning reference signals based on the at least two pieces of first frequency information, where the at least two positioning reference signals include the first positioning reference signal and the second positioning reference signal. This helps increase a transmission bandwidth used by the first apparatus for sending the positioning reference signal, thereby improving positioning accuracy.

The following describes the first apparatus provided in embodiments of this application.

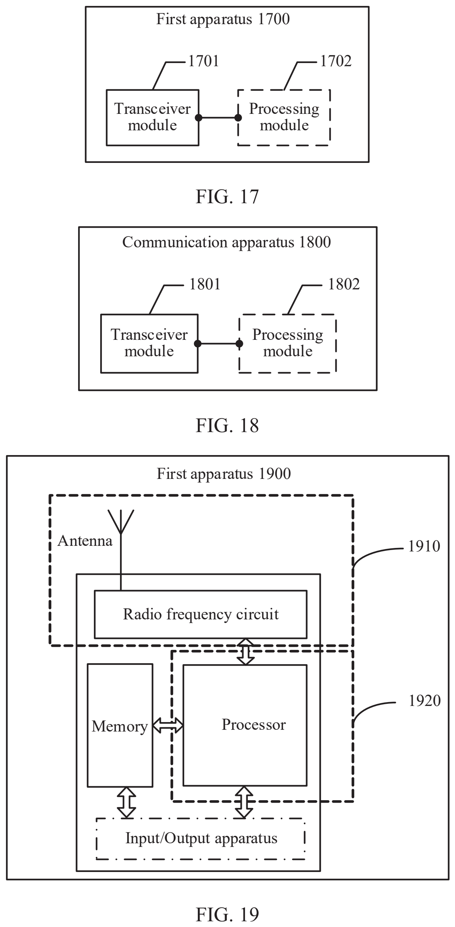

FIG. 17 is a diagram of a structure of a first apparatus according to an embodiment of this application. Refer to FIG. 17. The first apparatus 1700 includes a transceiver module 1701. Optionally, the first apparatus 1700 further includes a processing module 1702.

The processing module 1702 is configured to process data. The transceiver module 1701 may implement a corresponding communication function. The transceiver module 1701 may also be referred to as a communication interface or a communication module.

Optionally, the first apparatus 1700 may further include a storage module, and the storage module may be configured to store computer instructions and/or data. The processing module 1702 may read the computer instructions and/or the data in the storage module, so that the first apparatus 1700 implements the foregoing method embodiments.

The first apparatus 1700 is configured to perform a process performed by the first apparatus in the embodiment shown in FIG. 5. For details, refer to the related descriptions of the foregoing embodiment. For example, the processing module 1702 is configured to perform a processing-related operation on a first apparatus side in the embodiment shown in FIG. 5. The transceiver module 1701 is configured to perform a receiving and sending-related operation on the first apparatus side in the embodiment shown in FIG. 5. For example, the first apparatus 1700 may be configured to perform the following solution.

The transceiver module 1701 is configured to: receive at least two pieces of first frequency information from a communication apparatus, where the at least two pieces of first frequency information include first frequency information 1 and first frequency information 2, the first frequency information 1 is used by the first apparatus 1700 for sending a first positioning reference signal, and the first frequency information 2 is used by the first apparatus 1700 for sending a second positioning reference signal; and send at least two positioning reference signals based on the at least two pieces of first frequency information, where the at least two positioning reference signals include the first positioning reference signal and the second positioning reference signal.

Optionally, the transceiver module 1701 may include a sending module and a receiving module. The sending module is configured to perform sending operations in the foregoing method embodiments. The receiving module is configured to perform receiving operations in the foregoing method embodiments.

It should be noted that the first apparatus 1700 may include a sending module, but does not include a receiving module. Alternatively, the first apparatus 1700 may include a receiving module, but does not include a sending module. This may be specifically determined depending on whether the foregoing solution performed by the first apparatus 1700 includes a sending action and a receiving action.

It should be understood that specific processes in which the modules perform the foregoing corresponding processes have been described in detail in the foregoing method embodiments. For brevity, details are not described herein again.

In the foregoing embodiment, the processing module 1702 may be implemented by at least one processor or processor-related circuit. The transceiver module 1701 may be implemented by a transceiver or a transceiver-related circuit. The transceiver module 1701 may also be referred to as a communication module or a communication interface. The storage module may be implemented as at least one memory.

The following describes communication apparatuses provided in embodiments of this application.

FIG. 18 is a diagram of a structure of a communication apparatus according to an embodiment of this application. Refer to FIG. 18. The communication apparatus 1800 includes a transceiver module 1801. Optionally, the communication apparatus 1800 further includes a processing module 1802.

The processing module 1802 is configured to process data. The transceiver module 1801 may implement a corresponding communication function. The transceiver module 1801 may also be referred to as a communication interface or a communication module.

Optionally, the communication apparatus 1800 may further include a storage module, and the storage module may be configured to store computer instructions and/or data. The processing module 1802 may read the computer instructions and/or the data in the storage module, so that the communication apparatus 1800 implements the foregoing method embodiments.

The communication apparatus 1800 is configured to perform a process performed by the network device in the embodiment shown in FIG. 5. For details, refer to the related descriptions of the foregoing embodiment. For example, the processing module 1802 is configured to perform a processing-related operation on a network device side in the embodiment shown in FIG. 5. The transceiver module 1801 is configured to perform a receiving and sending-related operation on the network device side in the embodiment shown in FIG. 5. For example, the communication apparatus 1800 may be configured to perform the following solution.

The transceiver module 1801 is configured to: send at least two pieces of first frequency information to a first apparatus, where the at least two pieces of first frequency information include first frequency information 1 and first frequency information 2, the first frequency information 1 is used by the first apparatus for sending a first positioning reference signal, and the first frequency information 2 is used by the first apparatus for sending a second positioning reference signal; and receive at least two positioning reference signals from the first apparatus, where the at least two positioning reference signals include the first positioning reference signal and the second positioning reference signal, and the at least two positioning reference signals are determined based on the at least two pieces of first frequency information.

Optionally, the transceiver module 1801 may include a sending module and a receiving module. The sending module is configured to perform sending operations in the foregoing method embodiments. The receiving module is configured to perform receiving operations in the foregoing method embodiments.

It should be noted that the communication apparatus 1800 may include a sending module, but does not include a receiving module. Alternatively, the communication apparatus 1800 may include a receiving module, but not include a sending module. This may be specifically determined depending on whether the foregoing solution performed by the communication apparatus 1800 includes a sending action and a receiving action.

It should be understood that specific processes in which the modules perform the foregoing corresponding processes have been described in detail in the foregoing method embodiments. For brevity, details are not described herein again.

In the foregoing embodiment, the processing module 1802 may be implemented by at least one processor or processor-related circuit. The transceiver module 1801 may be implemented by a transceiver or a transceiver-related circuit. The transceiver module 1801 may also be referred to as a communication module or a communication interface. The storage module may be implemented as at least one memory.

Embodiments of this application further provide a first apparatus. FIG. 19 is a diagram of another structure of a first apparatus according to an embodiment of this application. Refer to FIG. 19. The first apparatus 1900 may be the first apparatus in the foregoing method embodiments, or may be a component (for example, a chip or a chip system), a module, or a unit of the first apparatus in the foregoing method embodiments. The first apparatus 1900 may be configured to perform operations performed by the first apparatus in the foregoing method embodiments.

A processor is mainly configured to: process data or a signal, control the first apparatus, execute a corresponding software program, process data of the software program, and the like.

It should be noted that the processor has a weak capability of implementing a signal processing algorithm, and therefore cannot implement a complex signal processing algorithm.

A memory is mainly configured to store software program and data. A radio frequency circuit is mainly configured to: perform conversion between a baseband signal and a radio frequency signal, and process the radio frequency signal.

An antenna is mainly configured to receive and send a radio frequency signal in a form of an electromagnetic wave.

Optionally, the first apparatus 1900 further includes an input/output apparatus, for example, a touchscreen, a display screen, or a keyboard, mainly configured to receive data input by a user and output data to the user.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the first apparatus, the radio frequency circuit receives the radio frequency signal through the antenna, converts the radio frequency signal into a baseband signal, and outputs the baseband signal to the processor. The processor converts the baseband signal into data, and processes the data.

For ease of description, only one memory and one processor are shown in FIG. 19. In an actual product of the first apparatus, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit of the first apparatus, and the processor having a processing function may be considered as a processing unit of the first apparatus. As shown in FIG. 19, the first apparatus includes a transceiver unit 1910 and a processing unit 1920. The transceiver unit may also be referred to as a transceiver, a transceiver machine, a transceiver apparatus, or the like. The processing unit may also be referred to as a processor, a processing board, a processing module, a processing apparatus, or the like.

Optionally, a component configured to implement a receiving function in the transceiver unit 1910 may be considered as a receiving unit, and a component configured to implement a sending function in the transceiver unit 1910 may be considered as a sending unit. In other words, the transceiver unit 1910 includes the receiving unit and the sending unit. The transceiver unit may also be referred to as the transceiver machine, the transceiver, the transceiver circuit, or the like. The receiving unit may also be referred to as a receiver machine, a receiver, a receiver circuit, or the like. The sending unit may also be referred to as a transmitter machine, a transmitter, a transmit circuit, or the like.

It should be understood that the transceiver unit 1910 is configured to perform a sending operation and a receiving operation of the first apparatus in the foregoing method embodiments, and the processing unit 1920 is configured to perform an operation other than the sending and receiving operations of the first apparatus in the foregoing method embodiments.

When the first apparatus is the chip, the chip includes a transceiver unit and a processing unit. The transceiver unit may be an input/output circuit or a communication interface. The processing unit is a processor, a microprocessor, an integrated circuit, or a logic circuit integrated on the chip. In the foregoing method embodiments, a sending operation corresponds to an output of the input/output circuit, and a receiving operation corresponds to an input of the input/output circuit.

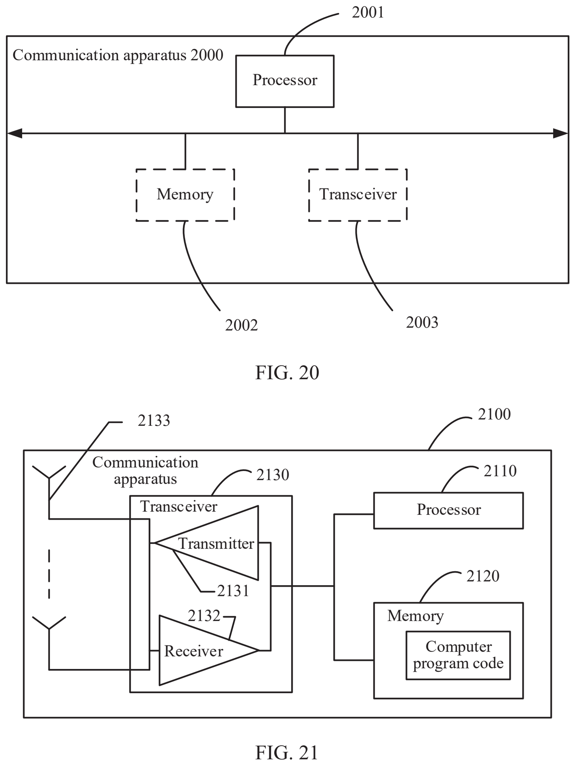

This application further provides a communication apparatus. FIG. 20 is a diagram of another structure of a communication apparatus according to an embodiment of this application. Refer to FIG. 20. The communication apparatus 2000 includes a processor 2001. Optionally, the communication apparatus 2000 further includes a memory 2002.

Optionally, the communication apparatus 2000 further includes a transceiver 2003.

In a possible implementation, the processor 2001, the memory 2002, and the transceiver 2003 are separately connected through a bus, and the memory 2002 stores computer instructions.

When the communication apparatus 2000 includes a network device, or a component (for example, a chip), a module, or a unit in the network device, the communication apparatus 2000 may be configured to perform steps performed by the network device in the embodiment shown in FIG. 5. Refer to the related descriptions in the foregoing method embodiments.

When the communication apparatus 2000 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

This application further provides a communication apparatus 2100. The communication apparatus 2100 may be a network device or a chip. The communication apparatus 2100 may be configured to perform operations performed by the network device in the embodiment shown in FIG. 5.

When the communication apparatus 2100 is a network device, for example, a base station, FIG. 21 is a diagram of a simplified structure of a base station according to an embodiment of this application. The base station includes a part 2110, a part 2120, and a part 2130.

The part 2110 is mainly configured to: perform baseband processing, control the base station, and the like. The part 2110 is usually a control center of the base station, may be usually referred to as a processor, and is configured to control the base station to perform a processing operation on a network device side in the foregoing method embodiments. The part 2120 is mainly configured to store computer program code and data. The part 2130 is mainly configured to: send and receive a radio frequency signal, and perform conversion between the radio frequency signal and a baseband signal. The part 2130 may be usually referred to as a transceiver module, a transceiver machine, a transceiver circuit, a transceiver, or the like. The transceiver module in the part 2130 may alternatively be referred to as a transceiver machine, or a transceiver, or the like, and includes an antenna 2133 and a radio frequency circuit (not shown in the figure). The radio frequency circuit is mainly configured to perform radio frequency processing. Optionally, a device configured to implement a receiving function in the part 2130 may be considered as a receiver, and a device configured to implement a sending function may be considered as a transmitter. In other words, the part 2130 includes the receiver 2132 and the transmitter 2131. The receiver machine may also be referred to as a receiving module, a receiver, a receiver circuit, or the like, and the transmitter machine may be referred to as a transmitting module, a transmitter, a transmitter circuit, or the like.

The part 2110 and the part 2120 may include one or more boards, and each board may include one or more processors and one or more memories. The processor is configured to read and execute a program in the memory, to implement a baseband processing function and control the base station. If there are a plurality of boards, the boards may be interconnected with each other, to enhance a processing capability. In an optional implementation, a plurality of boards may share one or more processors, or a plurality of boards share one or more memories, or a plurality of boards share one or more processors at the same time.

In an implementation, the transceiver module in the part 2130 is configured to perform a receiving and sending-related process performed by the network device in the embodiment shown in FIG. 5. The processor in the part 2110 is configured to execute a processing-related process executed by the network device in the embodiment shown in FIG. 5.

It should be understood that FIG. 21 is merely an example rather than a limitation, and the network device including the processor, the memory, and the transceiver may not depend on the structure shown in FIG. 17, FIG. 20, or FIG. 21.

When the communication apparatus 2100 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

An embodiment of this application further provides a computer-readable storage medium. The computer-readable storage medium stores computer instructions for implementing the method performed by the first apparatus or the network device in the foregoing method embodiments.

For example, when the computer instructions are executed by a computer, the computer is caused to implement the method performed by the first apparatus or the network device in the foregoing method embodiments.

An embodiment of this application further provides a computer program product including instructions. When the instructions are executed by a computer, the computer is caused to implement the method performed by the first apparatus or the network device in the foregoing method embodiments.

An embodiment of this application further provides a communication system. The communication system includes the first apparatus in the foregoing embodiments and the network device in the foregoing embodiments.

An embodiment of this application further provides a chip apparatus. The chip apparatus includes a processor, configured to invoke a computer program or computer instructions stored in a memory, to cause the processor to perform the method in the embodiment shown in FIG. 5.

In a possible implementation, an input of the chip apparatus corresponds to a receiving operation in the embodiment shown in FIG. 5, and an output of the chip apparatus corresponds to a sending operation in the embodiment shown in FIG. 5.

Optionally, the processor is coupled to the memory through an interface.

Optionally, the chip apparatus further includes the memory, and the memory stores the computer program or the computer instructions.

Any processor mentioned above may be a general-purpose central processing unit, a microprocessor, an application-specific integrated circuit (application-specific integrated circuit, ASIC), or one or more integrated circuits configured to control program execution of the method provided in the embodiment shown in FIG. 5. Any memory mentioned above may be a read-only memory (read-only memory, ROM), another type of static storage device that can store static information and instructions, a random access memory (random access memory, RAM), or the like.

It may be clearly understood by a person skilled in the art that for convenience and brevity of description, for explanation and beneficial effect of related content in any apparatus provided above, reference may be made to the foregoing corresponding method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a network device, or the like) to perform all or a part of steps of the methods in embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof. These modifications and replacements do not cause the essence of the corresponding technical solutions to depart from the scope of the technical solutions of embodiments of this application.

## Claims

1. A positioning method, wherein the method comprises:
receiving, by a first apparatus, at least two pieces of first frequency information from a network device, wherein the at least two pieces of first frequency information comprise first frequency information 1 and first frequency information 2, the first frequency information 1 is used by the first apparatus for sending a first positioning reference signal, and the first frequency information 2 is used by the first apparatus for sending a second positioning reference signal; and
sending, by the first apparatus, at least two positioning reference signals based on the at least two pieces of first frequency information, wherein the at least two positioning reference signals comprise the first positioning reference signal and the second positioning reference signal.

2. A positioning method, wherein the method comprises:
sending, by a network device, at least two pieces of first frequency information to a first apparatus, wherein the at least two pieces of first frequency information comprise first frequency information 1 and first frequency information 2, the first frequency information 1 is used by the first apparatus for sending a first positioning reference signal, and the first frequency information 2 is used by the first apparatus for sending a second positioning reference signal; and
receiving, by the network device, at least two positioning reference signals from the first apparatus, wherein the at least two positioning reference signals comprise the first positioning reference signal and the second positioning reference signal, and the at least two positioning reference signals are determined based on the at least two pieces of first frequency information.

3. The method according to claim 1 or 2, wherein the first apparatus is a tag terminal, and the network device is a network device having a tag reader function.

4. The method according to claim 3, wherein the tag terminal is a passive tag, a semi-passive tag, or an active tag.

5. The method according to any one of claims 1 to 4, wherein the first positioning reference signal is a positioning reference signal sequence or a first subsequence, the second positioning reference signal is the positioning reference signal sequence or a second subsequence, and the first subsequence and the second subsequence are a plurality of subsequences obtained by segmenting the positioning reference signal sequence.

6. The method according to any one of claims 1 to 5, wherein the first frequency information 1 indicates a frequency conversion sequence or a frequency offset value used by the first apparatus for sending the first positioning reference signal.

7. The method according to claim 6, wherein the first frequency information 2 indicates a frequency conversion sequence or a frequency offset value used by the first apparatus for sending the second positioning reference signal; and
the frequency conversion sequence used by the first apparatus for sending the first positioning reference signal is different from the frequency conversion sequence used by the first apparatus for sending the second positioning reference signal; or
the frequency offset value used by the first apparatus for sending the first positioning reference signal is different from the frequency offset value used by the first apparatus for sending the second positioning reference signal.

8. The method according to any one of claims 1 to 7, wherein the at least two pieces of first frequency information comprise a first sequence, and the first sequence indicates a quantity of times of sending the positioning reference signal by the first apparatus and frequency information used for each time of sending the positioning reference signal.

9. The method according to claim 8, wherein a length of the first sequence indicates the quantity of times of sending the positioning reference signal by the first apparatus.

10. The method according to claim 8 or 9, wherein the first sequence comprises one or more numerical values, and a quantity of numerical values comprised in the first sequence is the quantity of times of sending the positioning reference signal by the first apparatus.

11. The method according to claim 10, wherein each of the one or more numerical values corresponds to one time of sending the positioning reference signal, and each of the one or more numerical values indicates frequency information used by the first apparatus for one time of sending the positioning reference signal corresponding to the numerical value.

12. The method according to claim 11, wherein each of the one or more numerical values indicates a frequency offset value used by the first apparatus for one time of sending the positioning reference signal corresponding to the numerical value; or
each of the one or more numerical values indicates an index of a frequency conversion sequence used by the first apparatus for one time of sending the positioning reference signal corresponding to the numerical value.

13. The method according to any one of claims 1 to 7, wherein the at least two pieces of first frequency information comprise a second sequence, and a length of the second sequence indicates a quantity of segments obtained by segmenting the positioning reference signal sequence by the first apparatus.

14. The method according to claim 13, wherein the second sequence comprises one or more numerical values, and a quantity of numerical values comprised in the second sequence is the quantity of segments obtained by segmenting the positioning reference signal sequence by the first apparatus.

15. The method according to claim 14, wherein each of the one or more numerical values corresponds to one subsequence, different numerical values correspond to different subsequences, and the subsequences are obtained by segmenting the positioning reference signal sequence by the first apparatus; and
each of the one or more numerical values indicates an index of a frequency conversion sequence used by the first apparatus for sending the subsequence corresponding to the numerical value; or
each of the one or more numerical values indicates a frequency offset value used by the first apparatus for sending the subsequence corresponding to the numerical value.

16. The method according to any one of claims 2 to 15, wherein the method further comprises:
sending, by the network device, at least two pieces of second frequency information to a second apparatus, wherein the at least two pieces of second frequency information comprise second frequency information 1 and second frequency information 2, the second frequency information 1 is used by the second apparatus for sending a third positioning reference signal, and the second frequency information 2 is used by the second apparatus for sending a fourth positioning reference signal; and
receiving, by the network device, at least two positioning reference signals from the second apparatus, wherein the at least two positioning reference signals comprise the third positioning reference signal and the fourth positioning reference signal, and the at least two positioning reference signals are determined based on the at least two pieces of second frequency information.

17. The method according to claim 16, wherein the first frequency information 1 indicates the frequency conversion sequence used by the first apparatus for sending the first positioning reference signal, and the second frequency information 1 indicates a frequency conversion sequence used by the second apparatus for sending the third positioning reference signal; and
the frequency conversion sequence used by the first apparatus for sending the first positioning reference signal is different from the frequency conversion sequence used by the second apparatus for sending the third positioning reference signal.

18. The method according to claim 16, wherein the first frequency information 1 indicates the frequency offset value used by the first apparatus for sending the first positioning reference signal, and the second frequency information 1 indicates a frequency offset value used by the second apparatus for sending the third positioning reference signal; and
the frequency offset value used by the first apparatus for sending the first positioning reference signal is different from the frequency offset value used by the second apparatus for sending the third positioning reference signal.

19. An apparatus, wherein the apparatus comprises a transceiver module; and
the transceiver module is configured to perform the method according to any one of claims 1 and 3 to 15; or
the transceiver module is configured to perform the method according to any one of claims 2 to 18.

20. An apparatus, wherein the apparatus comprises a processor, and the processor is configured to execute a computer program or computer instructions in a memory, to perform the method according to any one of claims 1 and 3 to 15, or perform the method according to any one of claims 2 to 18.

21. The apparatus according to claim 20, wherein the apparatus further comprises the memory.

22. A computer-readable storage medium, wherein the computer-readable storage medium stores a computer program, and when the computer program is executed by an apparatus, the apparatus is caused to perform the method according to any one of claims 1 and 3 to 15, or the apparatus is caused to perform the method according to any one of claims 2 to 18.
